(19) Europäisches Patentamt
European Patent Office
Office européen des brevets

(11) EP 2 262 730 B1

(12) # EUROPÄISCHE PATENTSCHRIFT

(45) Veröffentlichungstag und Bekanntmachung des Hinweises auf die Patenterteilung:
**30.04.2014 Patentblatt 2014/18**

(21) Anmeldenummer: **09731187.2**

(22) Anmeldetag: **19.03.2009**

(51) Int Cl.:
***C01B 33/193*** $^{(2006.01)}$ ***C09C 1/30*** $^{(2006.01)}$

(86) Internationale Anmeldenummer:
**PCT/EP2009/053243**

(87) Internationale Veröffentlichungsnummer:
**WO 2009/124829 (15.10.2009 Gazette 2009/42)**

(54) **GEFÄLLTE KIESELSÄUREN ALS VERSTÄRKERFÜLLSTOFF FÜR ELASTOMERMISCHUNGEN**

PRECIPITATED SILICIC ACIDS AS A REINFORCEMENT FILLER FOR ELASTOMER MIXTURES

ACIDES SILICIQUES PRÉCIPITÉS EN TANT QUE CHARGE RENFORÇANTE POUR MÉLANGES ÉLASTOMÈRES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **07.04.2008 DE 102008017747**

(43) Veröffentlichungstag der Anmeldung:
**22.12.2010 Patentblatt 2010/51**

(73) Patentinhaber: **Evonik Degussa GmbH**
**45128 Essen (DE)**

(72) Erfinder:
- **WEHMEIER, Andre**
  **48429 Rheine (DE)**
- **STENZEL, Oleg**
  **60327 Frankfurt am Main (DE)**
- **WU, Weicheng**
  **45657 Recklinghausen (DE)**
- **GÖTZ, Christian**
  **63500 Seligenstadt (DE)**
- **NIEDERMEIER, Werner**
  **50321 Brühl (DE)**
- **HADDEMAN, Marinus**
  **51429 Bergisch-Gladbach (DE)**
- **BLUME, Anke**
  **53919 Weilerswist (DE)**

(56) Entgegenhaltungen:
**EP-A- 1 762 544 DE-A1- 10 330 118**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Fällungskieselsäuren, die eine besonders enge Partikelgrößenverteilung in Kombination mit einer besonderen Porengrößenverteilung aufweisen, ein Verfahren zu deren Herstellung und deren Verwendung als Füllstoff für Gummimischungen.

Der Einsatz von Fällungskieselsäuren in Elastomerenmischungen wie zum Beispiel Reifenlaufflächenmischungen ist lange bekannt. Für die Verwendung von Kieselsäuren als verstärkenden Füllstoff in Kautschukmischungen, wie sie u. a. zur Herstellung von luftgefüllten Reifen und technischen Gummiartikeln Verwendung finden, werden hohe Anforderungen gestellt. Sie sollen leicht und gut im Kautschuk einzuarbeiten und dispergierbar sein und in Verbindung mit einem Kopplungsreagenz, vorzugsweise einer bifunktionellen Organosiliziumverbindung, eine chemische Verbindung mit dem Kautschuk eingehen, die zu einer angestrebten hohen und homogenen Verstärkung der Gummimischung führt. Bei High Performance Reifen werden Kieselsäuren verwendet, um gute Eigenschaften hinsichtlich Nassrutschen, Rollwiderstand, Handling und Abriebverhalten zu erzielen. Bei Kieselsäuren des Standes der Technik, z. B. gemäß EP 0520862 B1, EP 0670813 B1 und EP 917519 B1 wird versucht das Problem des Abriebverhaltens durch eine besonders gute Dispergierbarkeit der Kieselsäuren zu lösen. Es hat sich jedoch gezeigt, dass eine gute Dispergierbarkeit alleine nicht ausreichend ist um das Problem zufriedenstellend zu lösen.

Dem Fachmann ist bekannt, dass niedermolekulare Verbindungen, wie z. B. bifunktionelle Organosiliziumverbindungen und Vulkanisationsbeschleuniger, in den Poren der Kieselsäure physi- und / oder chemisorbiert werden können und damit ihre Funktion als Kautschukhaftvermittler bzw. Vulkanisationsbeschleuniger zur Kautschukvernetzung nicht mehr oder nur noch eingeschränkt ausüben können.

Ferner ist dem Fachmann bekannt, dass das Kopplungsreagenz, üblicherweise eine bifunktionelle Organosiliziumverbindung bekannt aus (S. Wolff, "Chemical Aspects of Rubber Reinforcement by Fillers", Rubber Chem. Technol. 69, 325 (1996)), die kautschukwirksame Oberfläche der Kieselsäure möglichst homogen und quantitativ modifizieren soll. Die Modifizierung kann durch eine Vorbelegung der Kieselsäure in Substanz oder Lösung/Suspension (ex-situ) (U. Görl, R. Panenka, "Silanisierte Kieselsäuren - Eine neue Produktklasse für zeitgemäße Mischungsentwicklung", Kautsch. Gummi Kunstst. 46, 538 (1993)) sowie während des Mischprozesses (in-situ) (H.-D. Luginsland, "Processing of Silica/Silane-Filled Tread Compounds", paper No. 34 presented at the ACS Meeting, April 4-6, 2000, Dallas, Texas/USA) erfolgen, wobei die in-situ Modifizierung das zu bevorzugende und auch üblicherweise angewandte Verfahren darstellt. Um eine schnelle und quantitative Silanisierung der kautschukwirksamen Oberfläche zu gewährleisten, ist es notwendig, die Oberfläche gezielt mit reaktiven Silanolgruppen, an denen die Anbindung der Organosiliziumverbindung erfolgen kann, anzureichern. Eine Feuchte > 4 % ist notwendig, um eine schnelle und vollständige Silanisierung der Kieselsäureoberfläche mit einer Organosiliziumverbindung zu gewährleisten (U. Görl, A. Hunsche, A. Müller, H. G. Koban, "Investigations into the Silica/Silane Reaction System", Rubber Chem. Technol. 70, 608 (1997)).

Die Probleme des Abriebverhaltens wie auch der Anbindung des Kopplungsmittels an die Kieselsäure sind nach wie vor nicht optimal gelöst. Es besteht daher ein Bedarf an neuen Verstärkerkieselsäuren für Elastomerenmischungen, welche die o. g. Nachteile der bekannten Verstärkerkieselsäuren nicht oder nur in verminderten Maße zeigen und optimaler Weise gleichzeitig die Vorteile der bereits bekannten Verstärkerkieselsäuren weiterhin aufweisen.

Aufgabe der vorliegenden Erfindung war es daher, neue Fällungskieselsäuren zur Verfügung zu stellen, welche gut in Elastomermischungen eingearbeitet werden können und im Vergleich zu den Fällungskieselsäuren des Standes der Technik verbesserte anwendungstechnische Eigenschaften zeigen. Des Weiteren soll ein Verfahren zur Herstellung der entsprechenden Kieselsäuren bereitgestellt werden.

Weitere nicht explizit genannte Aufgaben ergeben sich aus dem Gesamtzusammenhang der Beschreibung, Beispiele und Ansprüche.

Überraschenderweise wurde gefunden, dass diese Aufgabe durch die in der nachfolgenden Beschreibung sowie in den Ansprüchen und den Beispielen näher definierten erfindungsgemäßen Fällungskieselsäuren gelöst wird. Die Erfinder haben nämlich herausgefunden, dass bedingt durch die Herstellung der Kieselsäuren nach bekannten Batch-Verfahren, die Gleichförmigkeit (Homogenität) der resultierenden Silica, festzumachen an deren physikalisch / chemischen Eigenschaften, nur bis zu einem bestimmten Grad möglich ist. Sie haben weiterhin herausgefunden, dass das Ziel eines verbesserten Abriebverhaltens von verstärkten Gummimischungen nur mittels einer möglichst in sich homogenen Kieselsäure gelöst werden kann. Als besonders wichtig hat es sich herausgestellt, dass die Partikelgrößenverteilung der Kieselsäuren möglichst eng und homogen ist und gleichzeitig die Porengrößenverteilung optimal ist.

Gegenstand der vorliegenden Erfindung sind daher Fällungskieselsäuren dadurch gekennzeichnet, dass sie folgende physikalisch-chemische Eigenschaften aufweisen:

| | |
|---|---|
| CTAB-Oberfläche | $\geq$ 150 $m^2/g$ |
| BET-Oberfläche: | $\geq$ 150 $m^2/g$ |
| DBP-Zahl | 180 - 350 g / (100 g) |

(fortgesetzt)

| | |
|---|---|
| half width / peak | ≤ 0,95 |
| d 25 % / d 75 % | 1,00 bis 1,80 |
| relative Breite $\gamma$ (gepresst) | ≤ 2,8 (g nm)/ml |
| Feinheitsindex F.V. (gepresst): | 100 bis 140 Å. |

Weiterer Gegenstand der vorliegenden Erfindung sind außerdem leicht dispergierbare Fällungskieselsäuren charakterisiert durch einen Morphologie-Index IM von 0,20 bis 0,85 und / oder eine modifizierte Searszahl Vol 2 von 13 bis 28 ml / (5g) und / oder ein Porenvolumenverhältnis V2 / V1 (gepresst) von 0,20 bis 0,75 und / oder einem $Al_2O_3$-Gehalt von 0,1 bis 5,0 Gew. % .

Die erfindungsgemäßen Fällungskieselsäuren können in Pulverform oder bevorzugt in Form von in etwa sphärischen Partikeln oder besonders bevorzugt in Granulatform verwendet werden.

Ein weiterer Gegenstand der vorliegenden Erfindung ist ein Verfahren zur Herstellung der erfindungsgemäßen Fällungskieselsäuren gemäß einem der Ansprüche 12 - 19.

Ebenfalls Gegenstand der vorliegenden Erfindung ist die Verwendung der erfindungsgemäßen Kieselsäuren in Elastomerenmischungen, vulkanisierbaren Kautschukmischungen und / oder sonstigen Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen.

Gegenstand der Erfindung sind zudem Elastomerenmischungen, vulkanisierbare Kautschukmischungen oder sonstige Vulkanisate sowie Reifen, die die erfindungsgemäßen Kieselsäuren enthalten.

Die erfindungsgemäßen Fällungskieselsäuren weisen im Vergleich zu den Fällungskieselsäuren des Standes der Technik eine besonders homogene und enge Partikelgrößenverteilung, ermittelt über eine Scheibenzentrifuge, in Kombination mit einer besonderen Porengrößenverteilung, ermittelt mittels Quecksilber-porosimetrie, auf. Ferner sind die erfindungsgemäßen Kieselsäuren gut bis sehr gut dispergierbar. Die Erfinder sind der Ansicht, dass, ohne an eine bestimmte Theorie gebunden zu sein, gerade diese Kombination es ermöglicht, eine über die gesamte Gummimatrix homogene Verstärkung zu gewährleisten, was insbesondere in einem verbesserten Abriebverhalten des fertigen Gummiartikels resultiert.

Die Breite der Partikelgrößenverteilung wird durch den Parameter "half width / peak" und die Homogenität durch das Verhältnis "d 25 % / d 75 %" der Gewichtsverteilungskurve, ermittelt nach der unten beschriebenen Methodik mittels Scheibenzentrifuge, charakterisiert. Die besondere Quecksilberporosimetrieverteilung wird durch die Parameter "relative Breite $\gamma$ (gepresst)" und "Feinheitsindex F.V. (gepresst)", ermittelt nach der unten beschriebenen Methodik, dargestellt. Die hinreichend hohe DBP sichert die gute Dispergierbarkeit.

In Summe führen diese Eigenschaften der erfindungsgemäßen Kieselsäuren zu einer sehr ausgewogenen Gummiperformance, mit besonderen Stärken in den Abriebswerten und im Verhalten bei dynamischer Beanspruchung.

Die Erfinder haben herausgefunden, dass der Effekt der auf Homogenität optimierten Kieselsäure durch eine raue Oberfläche der Kieselsäure, quantifizierbar über den Morphologieindex IM, unterstützt werden kann. Ohne an eine bestimmte Theorie gebunden zu sein, sind die Erfinder der Ansicht, dass die Anbindung der Kieselsäureoberfläche für den Kautschuk und vor allem für die Kopplungsreagenzien durch die raue Oberfläche verbessert wird. Somit führen die erfindungsgemäßen Fällungskieselsäuren nicht nur zu einem verbessertem Abriebverhalten, sondern auch zu einer verbesserten und beschleunigten Anbindung des Kopplungsmittels.

Die Kombination der genannten Merkmale führt dazu, dass sich die erfindungsgemäßen Fällungskieselsäuren hervorragend als Verstärkerfüllstoff für Elastomere eignen. Die erfindungsgemäßen Fällungskieselsäuren zeichnen sich dabei durch eine gegenüber dem Stand der Technik stark verbesserte Gesamtperformance aus. Dies zeigt sich vor allem in einem verbessertem Abriebverhalten und einem verbesserten dynamischen Verhalten. So konnte der Zielkonflikt einer Reifenlaufflächenmischung zwischen verbesserten Abriebverhalten bei gleichwertigen oder verbesserten Nassrutsch gelöst werden. Zusätzlich zeigt sich eine erhöhte dynamische Steifigkeit bei hohen Temperaturen, was zu einem verbessertem Fahrverhalten einer mit diesen Kieselsäuren gefüllten Lauffläche führt.

Die Gegenstände der Erfindung werden im nachfolgenden im Detail beschrieben.

In der vorliegenden Erfindung werden die Begriffe Kieselsäure, Verstärkerkieselsäuren und Fällungskieselsäure synonym verwendet.

Die erfindungsgemäßen Kieselsäuren weisen eine spezielle Porenstruktur auf, welche mittels Quecksilberporosimetrie charakterisiert wird. Da Kieselsäuren in verschiedenen Darreichungsformen vorliegen können - z. B. in Form von Pulvern, in etwa sphärischen Partikeln oder Granulaten - muss, um einen von der Darreichungsform weitgehend unabhängigen Messwert zu erhalten, zuvor eine mechanische Druckbehandlung der Kieselsäure erfolgen. Die mittels Quecksilberporosimetrie ermittelten und in den Ansprüchen beanspruchten Parameter "relative Breite $\gamma$ (gepresst)" und "Feinheitsindex F.V. (gepresst)" werden somit mit dem Zusatz "gepresst" in Klammern versehen, um eindeutig klar zu

stellen, dass diese Parameter an einer Kieselsäure gemessen wurden, welche vor der Durchführung der Quecksilberporosimetrie - wie in der Beschreibung der Meßmethoden angegeben - einer Druckbehandlung unterzogen wurden.

Die Druckbehandlung ist wie zuvor bereits angedeutet notwendig, um die Messgröße weitgehend unabhängig von der Darreichungsform der Kieselsäure zu machen und somit den "wahren", anwendungstechnisch relevanten Wert der Kieselsäure zu ermitteln und nicht den durch die Darreichungsform verfälschten.

Der Feinheitsindex F.V. repräsentiert den mittleren Radius der Intra-Aggregatporen. Der Feinheitsindex wird wie in der Beschreibung der Messmethoden sowie in Figur 3 im Detail dargestellt. Die Erfinder haben überraschend herausgefunden, dass für eine homogene Verstärkung ein Feinheitsindex F.V. (gepresst), der in einem Bereich von 100 bis 140 Å und bevorzugt 100 bis 130 Ä liegt, notwendig ist.

Die erfindungsgemäßen Kieselsäuren weisen eine enge Porengrößenverteilung der Poren mit einem Porendurchmesser kleiner als der des Maximums der Ableitung der Porenvolumenverteilungsfunktion auf, welche mittels Quecksilber-Porosimetrie bestimmt wird. Da Kieselsäuren in verschiedenen Darreichungsformen vorliegen können - z. B. in Form von Pulvern, in etwa sphärischen Partikeln oder Granulaten - muss, auch hier, um einen von der Darreichungsform weitgehend unabhängigen Messwert zu erhalten, zuvor eine mechanische Druckbehandlung der Kieselsäure erfolgen.

Das mittels der Quecksilber-Porosimetrie bestimmte Porenvolumen wird im Bereich von 3,5 nm bis 5 $\mu$m ausgewertet. Dazu wird auf die Daten der negativen logarithmischen Ableitung des kumulativen Porenvolumens ein Algorithmus angewendet, der zuerst den häufigsten, charakteristischen Porendurchmesser bestimmt. Dieser liegt typischer Weise im Bereich von 10 bis 100 nm. Ausgehend von diesem Wert erfolgt die weitere Auswertung gemäß der Angaben im experimentellen Teil. Man erhält damit eine **relative Breite** $\gamma$ (gepresst) der Porengrößenverteilung, welche unsymmetrische Porengrößenverteilungen berücksichtigt. Somit ist die relative Breite $\gamma$ (gepresst) ein charakteristisches, von der Darreichungsform weitgehend unabhängiges und gut reproduzierbar zu bestimmendes Merkmal, welches nur die Poren beschreibt, die einen kleineren Durchmesser als die häufigsten Poren aufweisen (vgl. Figur 1). Dieser Porengrößenbereich entspricht vorwiegend dem Porenvolumen zwischen den zu Kieselsäureaggregaten verwachsenen Primärpartikeln und erlaubt eine Aussage über deren Aggregation. Die relative Breite $\gamma$ (gepresst) der erfindungsgemäßen Kieselsäuren ist sehr eng, so dass nur geringe Schwankungen zwischen den Partikeln festzustellen sind. Ohne an eine bestimmte Theorie gebunden zu sein, sind die Erfinder der Ansicht, dass dies eine wesentliche Voraussetzung für eine homogene und gleichmäßige Verstärkung und somit einen guten Abrieb ist. Die relative Breite $\gamma$ (gepresst) der Porengrößenverteilung liegt bei < 2,8 (g nm)/ml , bevorzugt im Bereich von 1,0 bis 2,7 (g nm)/ml, besonders bevorzugt von 1,3 bis 2,6 (g nm)/ml und ganz besonders bevorzugt von 1,5 bis 2,5 (g nm)/ml sowie von 1,7 bis 2,4 (g nm)/ml.

Es hat sich als weitere wichtige Voraussetzung für einen verbesserten Abrieb herausgestellt, dass die erfindungsgemäßen Kieselsäuren eine enge und homogene Partikelgrößenverteilung aufweisen müssen. Die Breite der Partikelgrößenverteilung, ermittelt mittels Scheibenzentrifuge, wird dabei durch die auf die Lage des Peaks normierte Halbwertsbreite des Peaks **(half width / peak)** und die Homogenität durch den Quotient d 25 % / d 75 % charakterisiert. Die theoretisch höchst mögliche Homogenität wäre demnach bei einem Wert von 1,0 gegeben. Je näher sich dieses Verhältnis 1,0 nähert, desto besser, sprich homogener ist die Silica.

Die erfindungsgemäßen Kieselsäuren weisen daher eine auf die Lage des Peaks normierte Halbwertsbreite des Peaks (half width / peak) $\leq$ 0,95, bevorzugt $\leq$ 0,90, besonders bevorzugt 0,50 bis 0,90 und insbesondere bevorzugt 0,65 bis 0,90 auf.

Weiterhin weisen die erfindungsgemäßen Kieselsäuren ein Homogenitäts-Verhältnis **d 25 % / d 75 %** von 1,00 bis 1,80, bevorzugt 1,20 bis 1,80, besonders bevorzugt 1,30 bis 1,80 und ganz besonders bevorzugt 1,40 bis 1,75 auf.

Eine hohe spezifische **CTAB**-Oberfläche ist Grundvoraussetzung für ein ausreichend gutes Verstärkungspotential. Die erfindungsgemäßen Fällungskieselsäuren weisen daher eine CTAB-Oberfläche $\geq$ 150 $m^2/g$ , bevorzugt von 160 bis 220 $m^2/g$, besonders bevorzugt von 160 bis 190 $m^2/g$ und ganz besonders bevorzugt von 165 bis 185 $m^2/g$ auf.

Die spezifische **BET**-Oberfläche (vgl. S. Brunauer, P. H. Emmett, E. Teller, "Adsorption of Gases in Multimolecular Layers", J. Am. Chem. Soc. 60, 309 (1938)) beschreibt den Einfluss der Kieselsäure auf das Einarbeitungsverhalten in den Kautschuk, die Rohmischungseigenschaften, sowie die Vulkanisationskinetik. In einer weiteren speziellen Ausführungsform weisen die erfindungsgemäßen Kieselsäuren eine BET-Oberfläche von $\geq$ 150 $m^2/g$, bevorzugt von 150 bis 220 $m^2/g$, besonders bevorzugt von 160 bis 210 $m^2/g$ und ganz besonders bevorzugt von 165 bis 195 $m^2/g$ auf.

Die hinreichend hohe **DBP** sichert die ausreichend gute Dispergierbarkeit. Die erfindungsgemäßen Kieselsäuren weisen daher eine DBP von 180 bis 350 g/(100 g), bevorzugt von 180 bis 300 g/(100 g) und von 190 bis 290 g/(100 g), besonders bevorzugt von 200 bis 280 g/(100 g) und ganz besonders bevorzugt von 210 bis 270 g/ (100 g) auf. In einer bevorzugten Ausführungsform beträgt die DBP-Zahl 200 bis 350 g/(100 g), besonders bevorzugt 210 bis 350 g/(100 g), ganz besonders bevorzugt 220 bis 350 g/(100 g), insbesondere bevorzugt 230 bis 320 g/(100 g) und speziell bevorzugt 240 bis 290 g/(100 g) für Pulver und in etwa sphärische Partikel (Mikrogranulat). In einer anderen bevorzugten Ausfürhungsform beträgt die DBP-Zahl 180 bis 300 g/(100 g), besonders bevorzugt 190 bis 280 g/(100 g), ganz besonders bevorzugt 200 bis 260 g/(100 g), insbesondere bevorzugt 210 bis 250 g/(100 g) und speziell bevorzugt 210 bis 240 g/(100 g) für Granulate.

Die Rauhigkeit der Oberfläche der erfindungsgemäßen Kieselsäuren wird durch den **Morphologieindex IM** beschrieben. Die inverse Gaschromatographie (IGC), die häufig für die Charakterisierung von Kieselsäurepulvern angewandt wird, kann auch unter unendlich verdünnten Bedingungen (IGC-DI, DI= at infinite dilute conditions) dazu dienen, die Oberflächen-Rauhigkeit zu bestimmen.

IGC-DI erfordert die Messung der Netto-Retentions-Zeiten (die Zeit, die eine Substanz in der mit Kieselsäure gefüllten Säule verbringt, verglichen mit der entsprechenden Zeit der wenig interaktiven Probe Methan) von gelösten Substanzen, die in sehr kleinen Mengen eingespritzt werden. Unter diesen Bedingungen können die intermolekularen Wechselwirkungen der Substanzen vernachlässigt werden.

Die Schwankung der freien Adsorptionsenergie der Probe ($\Delta G_a$) steht in folgendem Verhältnis zu dem Retentionsvolumen ($V_G$):

$$\Delta G_a(\mathrm{Probe}) = -RT \cdot \ln(V_G)$$

(freie Adsorptionsenergie $\Delta G_a$ in [kJ/mol], allgemeine Gaskonstante R= 8,31441 [J/(K mol)], Temperatur in [K], In (natürlicher Logarithmus), Betrag des Retentionsvolumens $V_G$ in [ml]

$V_G$ wird folgendermaßen berechnet, in Abhängigkeit von der Durchflussgeschwindigkeit ($D_c$) des Trägergases (Helium) und der gemessenen Netto-Retentionszeit ($t_N$):

$$V_G = D_C \cdot t_N$$

(Durchflußgeschwindigkeit in [ml/min], Netto-Retentionszeit in [min])

Die berichtigte Durchflussgeschwindigkeit $D_c$ wird mit Hilfe des James-Martin Gas-kompressibilitätskorrekturfaktors (siehe J. R. CONDER, C. L. YOUNG, "Physico-Chemical Measurement by Gas Chromatography", Wiley, New-York, 26-32 (1979)) aus der Durchflussgeschwindigkeit der mobilen Phase, die normalerweise am Ausgang der Säule gemessen wird, bestimmt.

Wenn die freie Enthalpie ($\Delta G_a$) über die Anzahl von Kohlenstoffatomen für eine Serie von n-Alkanen aufgetragen wird, kann ein linearer Zusammenhang, wie in Figur 1 dargestellt, festgestellt werden. $\Delta G_a(CH_2)$ ist die Steigung der Geraden und stellt die freie Adsorptionsenergie einer einzelnen $CH_2$-Gruppe dar, Nc ist die Anzahl der C-Atome. Dieses gilt für beliebig gefüllte Säulen unter beliebigen Betriebsbedingungen.

Die Oberflächenrauhigkeit wurde abgeschätzt, indem die Verhaltensweisen von verzweigten und zyklischen Alkan-Proben mit denen von n-Alkanen verglichen wurden.

Die Bestimmungsmethode der Oberflächenmorphologie von Feststoffen basiert auf dem von E. Brendle und E. Papirer (siehe E. BRENDLE, E. PAPIRER, J. Colloid Interface Sci. 194, 207-216 (1997), "A new topological index for molecular probes used in inverse gas chromatography for the surface nanorugosity evaluation") entwickelten Topologie-Index-Konzept von Molekülen ($\chi_\tau$). Topologie-Indizes berücksichtigen die Form (Geometrie) der Moleküle und geben Auskunft über deren Van-der-Waals-Volumen. Die $\chi_\tau$-Werte für einige Moleküle, die in der IGC standardmäßig eingesetzt werden, sind in Tabelle 1 angegeben.

Tabelle 1: $\chi_\tau$ Werte für lineare bzw. verzweigte Alkane.

| **Proben** | $\chi_\tau$ |
|---|---|
| Lineare Alkane | |
| n-Pentan | 5 |
| n-Hexan | 6 |
| n-Heptan | 7 |
| n-Octan | 8 |
| n-Nonan | 9 |
| n-Decan | 10 |
| Verzweigte Alkane | |
| 2,2,4- Trimethylpentan | 7.40 |
| 2,2-Dimethylhexan | 7.58 |
| Cyclooctan | 8.32 |

Der Morphologie-Index (IM) ist der Quotient aus dem Retentionsvolumen eines verzweigten Alkan-Moleküls

($V_G(M)$) und dem Retentionsvolumen eines n-Alkans mit gleichem $\chi_\tau$ ($V_G(C)$).

$$IM(verzweigte\ Probe) = \frac{V_G(M)}{V_G(C)}$$

Die Referenz für die Zugänglichkeit zur Feststoffoberfläche ist die Gerade der n-Alkane.

Die Gleichung dieser Geraden ist die folgende: $\Delta Ga(V_G) = \Delta Ga\ (CH2) * \chi_\tau + b$

Wenn die Zugänglichkeit der verzweigten Alkane zur Feststoffoberfläche identisch zu denen der n-Alkanen ist, dann liegen die verzweigten Alkane auf der Geraden der n-Alkane. D.h., ($V_G(C)$) wird in dieser Weise bestimmt: $\Delta Ga\ (V_G(C)) = \Delta Ga\ (CH2) * \chi_{\tau\ (verzweigtes\ Alkan\text{-}Molek\ddot{u}l)} + b$.

Ausgehend von der freien Adsorptionsenergie sieht das Verhältnis folgendermaßen aus:

$$IM(verzweigte\ Probe) = \exp \frac{\Delta G_a(M)}{\Delta G_a(C)}$$

Diese Methode gibt Auskunft über die Zugänglichkeit der verzweigten Probe zur Oberfläche und zeigt mögliche "Größenausschlusseffekte" (size exclusion effects) auf.

Beim Vergleich der freien Adsorptionsenthalpien von linearen und verzweigten Alkanen zeigt sich, dass die Zugänglichkeit der Probe zur Oberfläche bei verzweigten (oder zyklischen) Alkanen identisch mit der von n-Alkanen ist, wenn der repräsentative Punkt eines verzweigten (oder zyklischen) Alkans sich auf der Geraden der n-Alkane befindet. Das bedeutet, auf molekularen Ebene betrachtet ist die Oberfläche glatt. N-Alkane und verzweigte Alkane haben die gleiche Zugänglichkeit zur Oberfläche und der entsprechende IM-Wert ist 1.

Wenn der repräsentative Punkt eines verzweigten (oder zyklischen) Alkans sich unterhalb der Geraden der n-Alkane befindet, ist die Zugänglichkeit dieser Probe zur Feststoffoberfläche niedriger als die der n-Alkane. Die Oberfläche ist somit rau. Diese Oberflächenrauhigkeit und die sterisch anspruchsvollere Struktur der verzweigten oder zyklischen Alkane setzen deren Oberflächenzugänglichkeit herab. Demzufolge sind die Wechselwirkungen zwischen der Oberfläche und den verzweigten oder zyklischen Alkanen reduziert und die entsprechenden IM-Werte sind kleiner als 1.

In einer bevorzugten Ausführungsform zeichnen sich die erfindungsgemäßen Kieselsäuren wie bereits erläutert durch eine besonders hohe Rauhigkeit der Oberfläche und somit eine besonders gute Anbindung des Kopplungsmittels aus. Der Morphologie-Index der erfindungsgemäßen Kieselsäuren (IM) liegt bei 0,20 bis 0,85, bevorzugt bei 0,30 bis 0,80, besonders bevorzugt 0,40 bis 0,80 und ganz besonders bevorzugt 0,50 bis 0,80.

Noch weiter verbessert werden kann die Anbindungsfähigkeit des Kopplungsmittels wenn eine hinreichend hohe Zahl an Silanolgruppen auf der Oberfläche vorhanden ist, da die Silanolgruppen die Anbindungsstellen für das Kopplungsmittel darstellen. In einer weiteren bevorzugten Ausführungsform weisen die erfindungsgemäßen Kieselsäuren daher eine modifizierte Searszahl Vol 2 von 13 bis 30 ml / (5g), bevorzugt 15 bis 29 ml / (5g), besonders bevorzugt 17 bis 28 ml / (5g) und ganz besonders bevorzugt 23 bis 27 ml / (5g).

Das Quecksilber-Porenvolumen V1 entspricht dem Porenvolumen der Poren mit einem Durchmesser < 400 Ä, welche - wie sich herausgestellt hat - einen wesentlichen Einfluss auf die Verstärkung haben. Bei den erfindungsgemäßen Kieselsäuren hat sich gezeigt, dass es vorteilhaft ist, wenn ein wesentlicher Teil dieses Porenvolumens (V2) von Poren mit einem Durchmesser von 175 bis 275 Å gebildet wird. Wenn dies der Fall ist und wie zuvor beschrieben, der relative Breite $\gamma$ (gepresst) der Poren und der Feinheitsindex F.V. (gepresst) in den in Anspruch 1 genannten Bereichen liegen, wurden besonders gute Abriebswerte gefunden, so dass die erfindungsgemäßen Kieselsäuren bevorzugt ein Porenvolumenverhältnis V2/V1 (gepresst) von 0,20 bis 0,75, besonders bevorzugt 0,25 bis 0,6, ganz besonders bevorzugt 0,30 bis 0,60 und insbesondere bevorzugt von 0,3 bis 0,55 aufweisen.

In einer speziellen Ausführungsform der vorliegenden Erfindung enthält die erfindungsgemäße Kieselsäure Aluminium, wobei der Aluminiumgehalt in Form von $Al_2O_3$ im Bereich von 0,1 bis 5 Gew. %, bevorzugt von 0,1 bis 2 Gew. %, besonders bevorzugt von 0,2 bis 1 Gew. % und ganz besonders bevorzugt von 0,3 bis 0,8 Gew. % beträgt. Die Erfinder haben überraschend herausgefunden, dass durch den erhöhten Aluminiumgehalt die Rohmischungseigenschaften einer mit einer solchen Kieselsäure gefüllten Kautschukmischung verbessert werden. So zeigt sich ein niedriges Drehmomentsminimum bei der MDR (Vulkanisationsisotherme) Prüfung und ein schnelleres und daher verbessertes Vulkanisationsverhalten. Somit können den Vorteilen der erfindungsgemäßen Kieselsäuren mit weniger als 0,1 Gew. % $Al_2O_3$ durch die $Al_2O_3$ Zugabe noch weitere Vorteile gegenüber Kieselsäuren des Standes der Technik zugefügt werden.

Die erfindungsgemäßen Fällungskieselsäuren können in verschiedenen **Darreichungsformen** vorliegen. Z.

B. in Form eines Pulvers mit einer mittels **Laserbeugung** bestimmten Partikelgröße $d_{50}$ von 1 bis 80 µm. Die pulverförmigen Partikel können eine unregelmäßige, aber auch eine regelmäßige äußere Form aufweisen, d. h. sie können z. B. auch im Wesentlichen sphärisch sein. Bevorzugt liegen die erfindungsgemäßen Fällungskieselsäuren in Form von im wesentlichen sphärischen Partikeln (Mikrogranulat) mit einer, mittels der **Siebrückstandsbestimmung (Alpine)** bestimmten, Partikelgröße $d_{50}$ von 80 µm bis 1000 µm vor. Im letztgenannten Fall werden die erfindungsgemäßen Kieselsäuren vorzugsweise mittels Düsenturmtrocknung, wie in EP 0937755 beschrieben, hergestellt und zeigen eine für diese Trocknungsmethode charakteristische äußere Form (siehe Abbildungen in EP 0937755). Besonders bevorzugt liegen die erfindungsgemäßen Fällungskieselsäuren in Form von Granulaten ($d_{50}$ > 1000 µm (Alpine Siebrückstand)) vor, und weisen nach der Granulation eine Partikelgrößenverteilung derart auf, dass mittels der **Siebrückstandsbestimmung (Ro-Tap)** mindestens 80 Gew.-% der Partikel größer als 300 µm und maximal 10 Gew.-% kleiner als 75 µm sind. Es wurde überraschend gefunden, dass die Darreichungsform als Granulat sich besonders eignet, um die durch die raue Oberfläche der erfindungsgemäßen Kieselsäuren erzeugten Effekte zu konservieren, so dass diese durch den Transport nicht verloren gehen.

Die genannten Vorzugsbereiche können unabhängig voneinander eingestellt werden.

Die erfindungsgemäßen Kieselsäuren können nach einem Verfahren hergestellt werden, welches ebenfalls Gegenstand der vorliegenden Erfindung ist. Dieses Verfahren umfasst die Schritte

a) Vorlegen einer wässrige Lösung eines Alkali- oder Erdalkalisilikats und / oder einer organischen und / oder anorganischen Base

b) gleichzeitiges Zudosieren von zumindest einem Alkali- und oder Erdalkalisilikat und zumindest einem Säuerungsmittel in diese Vorlage unter Rühren bei 75 bis 88 °C für 60 bis 120, bevorzugt 70 bis 90 Minuten

c) Fortsetzen der Zugabe des in Schritt b) verwendeten Säuerungsmittels und / oder eines anderen Säuerungsmittels, mit gleicher oder veränderter Dosierrate wie in Schritt b), solange, bis ein pH-Wert der Fällsuspension von 7 bis 10 erreicht ist und Nachrühren der erhaltenen Suspension bei diesem pH-Wert für 40 bis 80 Minuten, bei hohen Temperaturen von 80 bis 98 °C.

d) Rücksäuern mit zumindest einem Säuerungsmittel auf einen pH-Wert von etwa 5 bis etwa 8

e) Rücksäuern mit zumindest einem Säuerungsmittel auf einen pH-Wert von 4 bis 5 wobei die Dosierrate des Säuerungsmittels kleiner ist als in Schritt d).

f) Filtrieren der Fällsuspension

g) Waschen des Filterkuchens

h) Optional Verflüssigen des Filterkuchens

i) Trocknen

j) optional Vermahlen und / oder Granulieren

Die Vorlage in Schritt a) des erfindungsgemäßen Verfahrens kann ca. 20, 30, 40, 50, 60, 70, 80 oder 90 % des Endvolumens der Fällung betragen. Die zur Vorlage gegebenen basischen Verbindungen sind insbesondere ausgewählt aus der Gruppe der Alkalihydroxide, Erdalkalihydroxide, Alkalicarbonate, Alkalihydrogencarbonate und Alkalisilikate. Bevorzugt werden Wasserglas und / oder Natronlauge verwendet. Der pH-Wert der Vorlage liegt zwischen 7 und 14, bevorzugt zwischen 10 und 11.

Die Zugabe von zumindest einem Alkali- und oder Erdalkalisilikat und zumindest einem Säuerungsmittel während Schritt b) erfolgt bevorzugt derart, dass die Fällung bei konstanter Alkalizahl von 15 bis 40, besonders bevorzugt 15 bis 25 erfolgt.

Während der gleichzeitigen Zugabe des Alkali- und / oder Erdalkalisilikats in Schritt b) wird die Reaktionsmischung innig gerührt. In einer besonders bevorzugten Ausführungsform des erfindungsgemäßen Verfahrens wird die Reaktionslösung in Schritt b) und / oder c) nicht nur gerührt sondern zusätzlich mittels eines Scheraggregats Scherenergie eingebracht um die Dispergierbarkeit der erhaltenen Partikel weiter zu verbessern.

In Anschluss an Schritt b) wird im erfindungsgemäßen Verfahren die Alkali- und / oder Erdalkalisilikats gestoppt.

Während einem oder mehreren der Schritte a) bis j) kann optional eine zusätzliche Zugabe von organischen oder anorganischen Salzen erfolgen. Dies kann in Lösung oder als Feststoff, jeweils kontinuierlich über die Zugabezeit des Wasserglases und des Säuerungsmittels oder als Batchzugabe durchgeführt werden. Es ist auch möglich, die Salze in einer oder beiden Komponenten zu lösen und dann gleichzeitig mit diesen zuzugeben.

Als anorganische Salze werden bevorzugt Alkali- oder Erdalkalisalze verwendet. Insbesondere können alle Kombinationen der folgenden Ionen eingesetzt werden: $Li^+$, $Na^+$, $K^+$, $Rb^+$, $Be^{2+}$, $Mg^{2+}$, $Ca^{2+}$, $Sr^{2+}$, $Ba^{2+}$, $H^+$, $F^-$, $Cl^-$, $Br^-$, $I^-$, $SO_3^{2-}$, $SO_4^{2-}$, $HSO_4^-$, $PO_3^{3-}$, $PO_43^-$, $NO_3^-$, $NO_2^-$, $CO_3^{2-}$, $HCO_3^-$, $OH^-$, $TiO_3^{2-}$, $ZrO_3^{2-}$, $ZrO_4^{4-}$, $AlO_2^-$, $Al_2O_4^{2-}$, $BO_4^{3-}$. Als organische Salze sind die Salze der Ameisen-, Essig- und Propionsäure geeignet. Als Kation seien die genannten Alkali- oder Erdalkaliionen genannt. Die Konzentration dieser Salze in der Zugabelösung kann 0,01 bis 5 mol/l betragen. Bevorzugt wird als anorganisches Salz $Na_2SO_4$ verwendet.

Es ist möglich, die Säuerungsmittel in den Schritten b) bis d) in gleicher oder unterschiedlicher Weise zuzuführen,

d. h. mit gleicher oder unterschiedlicher Konzentration und / oder Zulaufgeschwindigkeit.

Analog kann auch das Alkali- und / oder Erdalkalisilikat in den Schritten a) und b) in gleicher oder unterschiedlicher Weise der Reaktion zugeführt werden.

Als Alkali- und / oder Erdalkalislilikat können neben Wasserglas (Natriumsilikat-Lösung) auch andere Silikate wie Kalium- oder Calciumsilikat verwendet werden. Als Säuerungsmittel können neben Schwefelsäure auch andere Säuerungsmittel wie HCl, $HNO_3$, $H_3PO_4$ oder $CO_2$ eingesetzt werden.

Die Filtration, Verflüssigung (z. B. gemäß DE 2447613) und Lang- oder Kurzzeittrocknung der erfindungsgemäßen Kieselsäuren in den Schritten f) bis i) sind dem Fachmann geläufig und können z. B. in den in dieser Beschreibung genannten Dokumenten nachgelesen werden. Die Filtration und das Waschen der Kieselsäure erfolgt bevorzugt in der Art und Weise, dass die Leitfähigkeit des Endprodukts < 2000 $\mu$S/cm und besonders < 1300 $\mu$S/cm beträgt (4 Gew.%ige Suspension in Wasser).

Bevorzugt wird der gewaschene Filterkuchen nach Schritt g) in Schritt h) durch Zugabe von Wasser und / oder zumindest einem Säuerungsmittel verflüssigt und danach getrocknet. Bei dieser Verflüssigung kann in einer speziellen Ausführungsform der vorliegenden Erfindung wird während der Verflüssigung Aluminium, bevorzugt in Form eines Aluminats, besonders bevorzugt in Form von Natriumaluminat zugegeben. Dadurch kann ein erhöhter Aluminiumgehalt in der resultierenden Fällungskieselsäure erzielt werden.

Bevorzugt wird die erfindungsgemäße Kieselsäure in einem Stromtrockner, Sprühtrockner, Etagentrockner, Bandtrockner, Drehrohrtrockner, Flash-Trockner, Spin-Flash-Trockner oder Düsenturm getrocknet. Diese Trocknungsvarianten schließen den Betrieb mit einem Atomizer, einer Ein- oder Zweistoffdüse oder einem integrierten Fließbett ein. Die Sprühtrocknung kann z. B. gemäß US 4094771 durchgeführt werden. Eine Düsenturmtrocknung kann beispielsweise wie in EP 0937755 beschrieben durchgeführt werden.

Nach der Trocknung kann gegebenenfalls eine Vermahlung und / oder Granulation mit einem Walzenkompaktor durchgeführt werden. Bevorzugt liegt die erfindungsgemäße Fällungskieselsäure nach dem Trockungsschritt oder der Vermahlung in Form eines Pulvers mit einer mittels **Laserbeugung** bestimmten Partikelgröße $d_{50}$ von 1 bis 80 $\mu$m vor. Die pulverförmigen Partikel können eine unregelmäßige, aber auch eine regelmäßige äußere Form aufweisen, d. h. sie können z. B. auch in etwa sphärische Partikel sein. Besonders bevorzugt liegen die erfindungsgemäßen Fällungskieselsäuren nach einer Düsenturmtrocknung in Form von in etwa sphärischen Partikel (Mikrogranulat) mit einer, mittels der **Siebrückstandsbestimmung (Alpine)** bestimmten, Partikelgröße $d_{50}$ von 80 $\mu$m bis 1000 $\mu$m vor. Im letztgenannten Fall werden die erfindungsgemäßen Kieselsäuren vorzugsweise mittels Düsenturmtrocknung, wie in EP 0937755 beschrieben, hergestellt und zeigen eine für diese Trocknungsmethode charakteristische äußere Form (siehe Abbildungen in EP 0937755). Ganz besonders bevorzugt liegen die erfindungsgemäßen Fällungskieselsäuren in Form von Granulaten ($d_{50}$ > 1000 $\mu$m (Alpine Siebrückstand)) vor und weisen sie nach der Granulation eine Partikelgrößenverteilung derart auf, dass mittels der **Siebrückstandsbestimmung (Ro-Tap)** mindestens 80 Gew.-% der Partikel größer als 300 $\mu$m und maximal 10 Gew.-% kleiner als 75 $\mu$m sind.

Als ganz besonders geeignet zur Herstellung der erfindungsgemäßen Kieselsäuren mir rauer Oberfläche hat sich die Spin-Flash-Trocknung mit anschließender Walzengranulation herausgestellt. Die Granulation kann beispielsweise mit einer Walzenpresse des Typs WP 50N/75 der Fa. Alexanderwerk AG, Remscheid durchgeführt werden. Bevorzugt wird dabei das pulverförmige Produkt ohne weitere Zugabe von Bindemitteln oder Flüssigkeiten über ein horizontales Einspeisesystem mit Einfachschnecke durch ein Vakuumsystem entlüftet und gleichmäßig zwischen die beidseitig gelagerten vertikal angeordneten Walzen eingebracht. Das Pulver wird dabei zu einer Schülpe verpresst und mittels eines Brechers in die gewünschte maximale Granulatgröße gebracht.

Ein weiterer Gegenstand der vorliegenden Erfindung ist die Verwendung der erfindungsgemäßen Kieselsäuren in und / oder zur Herstellung von Elastomerenmischungen, vulkanisierbaren Kautschukmischungen und / oder sonstigen Vulkanisaten, wie Luftreifen, Reifenlaufflächen, Kabelmänteln, Schläuchen, Treibriemen, Förderbändern, Keilriemen, Walzenbelägen, Reifen, Schuhsohlen, Dichtungen und Dämpfungselementen.

Ein weiterer Gegenstand der Erfindung sind daher Elastomerenmischungen, vulkanisierbare Kautschukmischungen und / oder sonstige Vulkanisate, die die erfindungsgemäße Kieselsäure enthalten, wie beispielsweise Formkörper wie Luftreifen, Reifenlaufflächen, Kabelmäntel, Schläuche, Treibriemen, Förderbänder, Walzenbeläge, Reifen, Schuhsohlen, Dichtungsringe und Dämpfungselemente.

Optional können die erfindungsgemäße Kieselsäure mit Silanen oder Organosilanen der Formeln I bis III modifiziert werden

$$[SiR^1_n(OR)_r(Alk)_m(Ar)_p]_q[B] \qquad (I),$$

$$SiR^1_n(OR)_{3-n}(Alkyl) \qquad (II),$$

oder

$SiR^1_n(OR)_{3-n}(Alkenyl)$ (III),

in denen bedeuten

- B: -SCN, -SH, -Cl, $-NH_2$, -OC(O)CHCH$_2$, -OC(O)C(CH$_3$)CH$_2$ (wenn q = 1) oder $-S_w-$ (wenn q = 2), wobei B chemisch an Alk gebunden ist,
- R und $R^1$: aliphatischer, olefinischer, aromatischer oder arylaromatischer Rest mit 2 - 30 C-Atomen, der optional mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Metacrylat-, Organosilanrest, wobei R und $R^1$ eine gleiche oder verschiedene Bedeutung oder Substituierung haben können.
- n: 0, 1 oder 2,
- Alk: einen zweiwertigen unverzweigten oder verzweigten Kohlenwasserstoffrest mit 1 bis 6 Kohlenstoffatomen,
- m: 0 oder 1,
- Ar: einen Arylrest mit 6 bis 12 C-Atomen, bevorzugt 6 C-Atomen, der mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Organosilanrest.
- p: 0 oder 1, mit der Maßgabe, dass p und n nicht gleichzeitig 0 bedeuten,
- q: 1 oder 2,
- w: eine Zahl von 2 bis 8,
- r: 1, 2 oder 3, mit der Maßgabe, dass r + n + m + p = 4,
- Alkyl: einen einwertigen unverzweigten oder verzweigten gesättigten Kohlenwasserstoffrest mit 1 bis 20 Kohlenstoffatomen, bevorzugt 2 bis 8 Kohlenstoffatomen,
- Alkenyl: einen einwertigen unverzweigten oder verzweigten ungesättigten Kohlenwasserstoffrest mit 2 bis 20 Kohlenstoffatomen, bevorzugt 2 bis 8 Kohlenstoffatomen.

Auch kann die erfindungsgemäße Kieselsäure mit siliziumorganischen Verbindungen der Zusammensetzung $SiR^2_{4-n}X_n$ (mit n = 1, 2, 3, 4), $[SiR^2_xX_yO]_z$ (mit $0 \leq x \leq 2$; $0 \leq y \leq 2$; $3 \leq z \leq 10$, mit x + y = 2), $[SiR^2_xX_yN]_z$ (mit $0 \leq x \leq 2$; $0 \leq y \leq 2$; $3 \leq z \leq 10$, mit x + y = 2), $SiR^2_nX_mOSiR^2_oX_p$ (mit $0 \leq n \leq 3$; $0 \leq m \leq 3$; $0 \leq o \leq 3$; $0 \leq p \leq 3$, mit n + m = 3, o + p = 3), $SiR^2_nX_mNSiR^2_oX_p$ (mit $0 \leq n \leq 3$; $0 \leq m \leq 3$; $0 \leq o \leq 3$; $0 \leq p \leq 3$, mit n + m = 3, o + p = 3), $SiR^2_nX_m[SiR^2_xX_yO]_zSiR^2_oX_p$ (mit $0 \leq n \leq 3$; $0 \leq m \leq 3$; $0 \leq x \leq 2$; $0 \leq y \leq 2$; $0 \leq o \leq 3$; $0 \leq p \leq 3$; $1 \leq z \leq 10000$, mit n + m = 3, x + y = 2, o + p = 3) modifiziert werden. Bei diesen Verbindungen kann es sich um lineare, cyclische und verzweigte Silan-, Silazan- und Siloxanverbindungen handeln. Bei $R^2$ kann es sich um substituierte und / oder unsubstituierte Alkyl- und / oder Arylreste mit 1 - 20 Kohlenstoffatomen handeln, welche mit funktionellen Gruppen wie der Hydroxygruppe, der Aminogruppe, Polyethern wie Ethylenoxid und / oder Propylenoxid und Halogenidgruppen wie Fluorid substituiert sein können. $R^2$ kann auch Gruppen wie Alkoxy-, Alkenyl-, Alkinyl- und Aryl-Gruppen und schwefelhaltige Gruppen enthalten. Bei X kann es sich um reaktive Gruppen wie Silanol-, Amino-, Thiol-, Halogen-, Alkoxy- Alkenylgruppen und Wasserstoff-Rest handeln.

Bevorzugt werden lineare Polysiloxane der Zusammensetzung $SiR^2_nX_m[SiR^2_xX_yO]_zSiR^2_oX_p$ (mit $0 \leq n \leq 3$; $0 \leq m \leq 3$; $0 \leq x \leq 2$; $0 \leq y \leq 2$; $0 \leq o \leq 3$; $0 \leq p \leq 3$; $1 \leq z \leq 10000$, mit n + m = 3; x + y = 2; o + p = 3) verwendet, bei welchen $R^2$ bevorzugt durch Methyl repräsentiert wird.

Besonders bevorzugt werden Polysiloxane der Zusammensetzung $SiR^2_nX_m[SiR^2_xX_yO]_zSiR^2_oX_p$ (mit $0 \leq n \leq 3$; $0 \leq m \leq 1$; $0 \leq x \leq 2$; $0 \leq y \leq 2$; $0 \leq o \leq 3$; $0 \leq p \leq 1$; $1 \leq z \leq 1000$, mit n + m = 3, x + y = 2, o + p = 3) verwendet, bei welchen $R^2$ bevorzugt durch Methyl repräsentiert wird.

Die Modifizierung der optional granulierten, ungranulierten, vermahlenen und / oder unvermahlenen Fällungskieselsäure mit einem oder mehreren der genannten Organosiliziumverbindungen kann in Mischungen von 0.5 bis 50 Teilen, bezogen auf 100 Teile Fällungskieselsäure, insbesondere 1 bis 15 Teile, bezogen auf 100 Teile Fällungskieselsäure erfolgen, wobei die Reaktion zwischen Fällungskieselsäure und Organosiliziumverbindung während der Mischungsherstellung (in situ) oder außerhalb durch Aufsprühen und anschließendes Tempern der Mischung, durch Mischen des Organosiliziumverbindung und der Kieselsäuresuspension mit anschließender Trocknung und Temperung (zum Beispiel gemäß DE 3437473 und DE 19609619) oder gemäß des Verfahrens beschrieben in DE 19609619 oder DE-PS 4004781 durchgeführt werden kann.

Als Organosiliziumverbindungen eignen sich grundsätzlich alle bifunktionellen Silane, die einerseits eine Kopplung zu dem silanolgruppenhaltigen Füllstoff und andererseits eine Kopplung zum Polymer bewerkstelligen können. Übliche verwendete Mengen der Organosiliziumverbindungen sind 1 bis 10 Gew.-% bezogen auf die Gesamtmenge an Fällungskieselsäure.

Beispiele für diese Organosiliziumverbindungen sind: Bis(3-triethoxysilylpropyl)tetrasulfan, Bis(3-triethoxysilylpropyl)disulfan, Vinyltrimethoxysilan, Vinyltriethoxysilan, 3-Mercaptopropyltrimethoxysilan, 3-Mercaptopropyltriethoxysilan, 3-Aminopropyltrimethoxysilan, 3-Aminopropyltriethoxysilan. Weitere Organosiliziumverbindungen sind in WO 99/09036, EP 1108231, DE 10137809, DE 10163945, DE 10223658 beschrieben.

In einer bevorzugten Ausführungsform der Erfindung kann als Silan das Bis(triethoxysilyl-propyl)tetrasulfan eingesetzt werden.

Die erfindungsgemäße Kieselsäure kann in Elastomerenmischungen, Reifen oder vulkanisierbaren Kautschukmischungen als Verstärkerfüllstoff in Mengen von 5 bis 200 Teilen, bezogen auf 100 Teile Kautschuk als Pulver, in etwa sphärische Partikel oder Granulat sowohl mit Silanmodifizierung als auch ohne Silanmodifizierung eingemischt werden.

Kautschuk- und Elastomerenmischungen sind im Sinne der vorliegenden Erfindung als äquivalent zu betrachten.

Neben Mischungen, die ausschließlich die erfindungsgemäßen Kieselsäuren, mit und ohne den genannten Organosiliziumverbindungen als Füllstoffe enthalten, können die Elastomeren- oder Kautschukmischungen zusätzlich mit einem oder mehreren mehr oder weniger verstärkenden Füllstoffen gefüllt sein.

Als weitere Füllstoffe können folgende Materialien eingesetzt werden:

- Ruße: Die hierbei zu verwendenden Ruße sind nach dem Flammruß-, Furnace- oder Gasruß-Verfahren hergestellt und besitzen BET-Oberflächen von 20 bis 200 $m^2/g$, wie z. B. SAF-, ISAF-, HSAF-, HAF-, FEF-oder GPF-Ruße. Die Ruße können gegebenenfalls auch Heteroatome wie zum Beispiel Silizium enthalten.
- hochdisperse pyrogene Kieselsäuren, hergestellt zum Beispiel durch Flammenhydrolyse von Siliziumhalogeniden. Die Kieselsäuren können gegebenenfalls auch als Mischoxide mit anderen Metalloxiden, wie Al-, Mg-, Ca-, Ba-, Zn- und Titanoxiden vorliegen.
- weitere kommerzielle Kieselsäuren
- Synthetische Silicate, wie Aluminiumsilicat, Erdalkalisilicate wie Magnesiumsilicat oder Calciumsilicat, mit BET-Oberflächen von 20 bis 400 $m^2/g$ und Primärteilchendurchmessern von 10 bis 400 nm
- Synthetische oder natürliche Aluminiumoxide und - hydroxide
- natürliche Silicate, wie Kaolin andere natürlich vorkommende Siliziumdioxidverbindungen
- Glasfaser und Glasfaserprodukte (Matten, Stränge) oder Mikroglaskugeln
- Stärke und modifizierte Stärketypen
- Naturfüllstoffe, wie zum Beispiel Clays und Kieselkreide

Das Verschnittverhältnis richtet sich auch hier wie bei der Dosierung der Organosiliziumverbindungen nach dem zu erzielenden Eigenschaftsbild der fertigen Gummimischung. Ein Verhältnis von 5 - 95 % zwischen den erfindungsgemäßen Kieselsäuren und den anderen oben genannten Füllstoffen (auch als Gemisch) ist denkbar und wird in diesem Rahmen auch realisiert.

In einer besonders bevorzugten Ausführungsform können 10 bis 150 Gew.-Teile an Kieselsäuren, ganz oder teilweise bestehend aus der erfindungsgemäßen Kieselsäure, gegebenenfalls zusammen mit 0 bis 100 Gew.-Teilen Ruß, sowie 1 bis 20 Gew.-Teile einer Organosiliziumverbindung, jeweils bezogen auf 100 Gew.-Teile Kautschuk, zur Herstellung der Mischungen eingesetzt werden.

Neben den erfindungsgemäßen Kieselsäuren, den Organosiliziumverbindungen und anderen Füllstoffen bilden die Elastomere einen weiteren wichtigen Bestandteil der Kautschukmischung. Zu nennen wären hierbei Elastomere, natürliche und synthetische, ölgestreckt oder nicht, als Einzelpolymer oder Verschnitt (Blend) mit anderen Kautschuken, wie zum Beispiel Naturkautschuke, Polybutadien (BR), Polyisopren (IR), Styrol/Butadien-Copolymerisate mit Styrolgehalten von 1 bis 60, vorzugsweise 2 bis 50 Gew.-% (SBR) insbesonders hergestellt mittels des Lösungspolymerisationsverfahrens, Butylkautschuke, Isobutylen/Isopren-Copolymerisate (IIR), Butadien/Acrylnitril-Copolymere mit Acrylnitrilgehalten von 5 bis 60, vorzugsweise 10 bis 50 Gew.-% (NBR), teilhydrierter oder vollständig hydrierter NBR-Kautschuk (HNBR), Ethylen/Propylen/Dien-Copolymerisate (EPDM), sowie Mischungen dieser Kautschuke.

Ferner kommen für Kautschukgemische mit den genannten Kautschuken die folgenden zusätzlichen Kautschuke in Frage: Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke. Bevorzugte Synthesekautschuke sind beispielsweise bei W. Hofmann, "Kautschuktechnologie", Genter Verlag, Stuttgart 1980, beschrieben.

Für die Herstellung der Reifen sind insbesondere anionisch polymerisierte L-SBR-Kautschuke (Lösungs-SBR) mit einer Glasübergangstemperatur oberhalb von -50 °C sowie deren Mischungen mit Dienkautschuken von Interesse.

Die erfindungsgemäßen Kieselsäuren, mit oder ohne Organosiliziumverbindung, können Einsatz in allen Gummianwendungen, wie zum Beispiel Formkörper, Reifen, Reifenlaufflächen, Fördergurte, Förderbänder, Dichtungen, Treibriemen, Schläuche, Schuhsohlen, Kabelmäntel, Walzenbeläge, Dämpfungselemente etc. finden.

Die Einarbeitung dieser Kieselsäure und die Herstellung der diese Kieselsäure enthaltenden Mischungen erfolgt in der in der Gummiindustrie üblichen Art und Weise auf einem Innenmischer oder Walzwerk bei bevorzugt 80 - 200 °C. Die Darreichungs- bzw. Einsatzform der Kieselsäuren kann sowohl als Pulver, als in etwa sphärische Partikel oder als

Granulat erfolgen. Auch hier unterscheiden sich die erfindungsgemäßen Kieselsäuren nicht von den bekannten hellen Füllstoffen.

Die erfindungsgemäßen Kautschukvulkanisate können weitere Kautschukhilfsstoffe in den üblichen Dosierungen enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol. Diese Verbindungen sind in der Kautschukindustrie bekannt.

Die Kautschukhilfsmittel können in bekannten Mengen, die sich unter anderem nach dem Verwendungszweck richten, eingesetzt werden. Übliche Mengen sind zum Beispiel Mengen von 0,1 bis 50 Gew.-%, bezogen auf den eingesetzten Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Hauptbeschleuniger einzeln oder in Kombination sind Mercaptobenzthiazole, Sulfenamide, Thiurame, Dithiocarbamate in Mengen von 0,1 bis 3 Gew.-%. Beispiele für Cobeschleuniger einzeln oder in Kombination sind Guanidiene, Thioharnstoffe und Thiocarbonate in Mengen von 0,1 bis 5 Gew.-%. Schwefel kann üblicherweise in Mengen von 0,1 bis 10 Gew.-%, bevorzugt 1 bis 3 Gew.-%, bezogen auf den eingesetzten Kautschuk, eingesetzt werden.

Die erfindungsgemäßen Kieselsäuren können in Kautschuken eingesetzt werden, die mit Beschleunigern und / oder Schwefel, aber auch peroxidisch vernetzbar sind.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und der Organosiliziumverbindung kann in bekannten Mischaggregaten, wie Walzen, Innenmischern und Mischextrudern, durchgeführt werden.

Die erfindungsgemäßen Kautschukmischungen eignen sich zur Herstellung von Formkörpern, zum Beispiel für die Herstellung von Luftreifen, Reifenlaufflächen für Sommer-, Winter- und Ganzjahresreifen, PKW-Reifen, Reifen für Nutzfahrzeuge, Motorradreifen, Reifenunterbauteilen, Kabelmänteln, Schläuchen, Treibriemen, Förderbändern, Walzenbelägen, Schuhsohlen, Dichtungsringen und Dämpfungselementen.

Die erfindungsgemäßen Kautschukmischungen sind insbesondere für die Herstellung von PKW (sowohl bei Sommer-, als auch Winter- und Ganzjahresreifen)- und Motorrad-Reifenlaufflächen, aber auch für Reifen für Nutzfahrzeuge mit erniedrigtem Rollwiderstand bei gutem Abriebswiderstand geeignet.

Ferner eignen sich die erfindungsgemäßen Kautschukmischungen, ohne Zusatz von Organosiliziumverbindungen, im Blend mit einem typischen Laufflächenruß auch zur Verbesserung des Cut & Chip Verhaltes von Bau-, Landmaschinen- und Grubenreifen (Definition und weitere Ausführungen siehe "New insights into the tear mechanism" und Referenzen hierin, präsentiert auf der Tire Tech 2003 in Hamburg von Dr. W. Niedermeier).

Die Reaktionsbedingungen und die physikalisch/chemischen Daten der erfindungsgemäßen Fällungskieselsäuren werden mit den folgenden Methoden bestimmt:

**<u>Bestimmung des Feststoffgehalts von Filterkuchen</u>**

Nach dieser Methode wird der Feststoffgehalt von Filterkuchen durch Entfernen der flüchtigen Anteile bei 105 °C bestimmt.

Dazu werden in eine trockene, tarierte Porzellanschale (Durchmesser 20 cm) 100,00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 ± 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.

Man bestimmt den Feststoffgehalt (FG) in % gemäß

$$FG = A / E * 100\ \%,$$

mit A = Auswaage in g und E = Einwaage in g.

**<u>Bestimmung des Feststoffgehalts von Fällsuspensionen</u>**

Der Feststoffgehalt der Fällsuspension wird gravimetrisch nach Filtration der Probe bestimmt.

100, 0 ml der homogenisierten Fällsuspension ($V_{Suspension}$) werden bei Raumtemperatur mit Hilfe eines Messzylinders abgemessen. Die Probe wird über einen Rundfilter (TYP 572, Fa. Schleicher & Schuell) in einer Porzellannutsche abgenutscht, aber nicht trockengesaugt, um Rißbildung des Filterkuchens zu verhindern. Anschließend wäscht

man den Filterkuchen mit 100,0 ml destillierten Wasser. Der ausgewaschene Filterkuchen wird in eine tarierte Porzellanschale überführt und bei 105 ± 2 °C in einem Trockenschrank bis zur Gewichtskonstanz getrocknet. Nach Abkühlen auf Raumtemperatur wird das Gewicht der getrockneten Kieselsäure ($m_{Probe}$) ermittelt.

Der Feststoffgehalt bestimmt sich gemäß:

$$\text{Feststoffgehalt in g/l} = (m_{Probe} \text{ in g}) / (V_{Suspension} \text{ in l}).$$

**Bestimmung des Feststoffgehalts von Kieselsäurespeise**

Die Kieselsäurespeise wird im IR-Trockner bis zur Gewichtskonstanz getrocknet. Der Trocknungsverlust besteht überwiegend aus Wasserfeuchtigkeit.

In eine tarierte Aluminiumschale werden 2,0 g Kieselsäurespeise eingefüllt und der Deckel der IR-Trockeneinheit (Fa. Mettler, Typ LP 16) geschlossen. Nach Drücken der Starttaste beginnt die Trocknung der Suspension bei 105 °C, die automatisch beendet wird, wenn die Gewichtsabnahme pro Zeiteinheit den Wert von 2 mg/(120 s) unterschreitet.

Die Gewichtsabnahme in % wird vom Gerät bei Anwahl des 0-100 %-Modus direkt angezeigt. Der Feststoffgehalt ergibt sich gemäß

$$\text{Feststoffgehalt in \%} = 100\ \% - \text{Gewichtsabnahme in \%}.$$

**Bestimmung der Alkalizahl**

Als Alkalizahl-Bestimmung (AZ-Zahl), versteht man den Verbrauch an Salzsäure in ml (bei 50 ml Probevolumen, 50 ml destillierten Wasser und einer verwendeten Salzsäure der Konzentration 0,5 mol/l) bei einer direkten potentiometrischen Titration von alkalischen Lösungen, bzw. Suspensionen bis zu einem pH-Wert von 8,30. Man erfasst hiermit den freien Alkaligehalt der Lösung bzw. Suspension. Das pH-Gerät (Fa. Knick, Typ: 766 pH-Meter Calimatic mit Temperaturfühler) und die pH-Elektrode (Einstabmesskette der Fa. Schott, Typ N7680) werden mit Hilfe zweier Pufferlösungen (pH = 7,00 und pH = 10,00) bei Raumtemperatur kalibriert. Die Einstabmesskette wird in die auf 40 °C temperierte Meßlösung bzw. -suspension bestehend aus 50,0 ml Fällsuspension und 50,0 ml entionisiertem Wasser getaucht. Anschließend gibt man tropfenweise Salzsäure-Lösung der Konzentration 0,5 mol/l hinzu, bis sich ein konstanter pH-Wert von 8,30 einstellt. Auf Grund des sich erst langsam einstellenden Gleichgewichts zwischen der Kieselsäure und dem freien Alkaligehalt bedarf es einer Wartezeit von 15 min bis zu einem endgültigen Ablesen des Säureverbrauchs. Bei den gewählten Stoffmengen und Konzentrationen entspricht der abgelesene Salzsäureverbrauch in ml direkt der Alkalizahl, welche dimensionslos angegeben wird.

**Bestimmung des pH-Wertes**

Die Bestimmung des pH-Wertes der Kieselsäure erfolgt als 5%ige wässrige Suspension bei Raumtemperatur in Anlehnung DIN EN ISO 787-9. Gegenüber den Vorgaben dieser Norm wurden die Einwaagen verändert (5,00 g Kieselsäure auf 100 ml entionisiertes Wasser).

**Bestimmung der elektrischen Leitfähigkeit**

Die Bestimmung der elektrischen Leitfähigkeit von Kieselsäure wird als 4%ige wässrige Suspension bei Raumtemperatur in Anlehnung an DIN EN ISO 787-14 durchgeführt. Gegenüber den Vorgaben dieser Norm wurden die Einwaagen verändert (4,00 g Kieselsäure auf 100 ml entionisiertes Wasser).

**Bestimmung der Feuchte**

Die Feuchte von Kieselsäuren wird gemäß ISO 787-2 nach 2-stündiger Trocknung in einem Umlufttrockenschrank bei 105 °C bestimmt. Dieser Trocknungsverlust besteht überwiegend aus Wasserfeuchtigkeit.

**Bestimmung der modifizierte Searszahl Vol 2 von Kieselsäuren**

Durch die Titration von Kieselsäure mit Kaliumhydroxid-Lösung im Bereich von pH 6 bis pH 9 läßt sich die modifizierte Searszahl Vol 2 als Maß für die Zahl an freien Hydroxy-Gruppen bestimmen.

Der Bestimmungsmethode liegen die folgenden chemischen Reaktionen zu Grunde, wobei "Si"-OH eine Silanolgruppe der Kieselsäure symbolisieren soll:

"Si"-OH + NaCl ⇒ "Si"-ONa + HCl

HCl + KOH ⇒ KCl + $H_2O$.

Durchführung

10,00 g einer pulverförmigen, einer in etwa sphärische Partikel aufweisenden oder granulären Kieselsäure mit 5 ± 1 % Feuchte werden 60 Sekunden mit einer IKA-Universalmühle M 20 (550 W; 20 000 U/min) zerkleinert. Gegebenenfalls muß der Feuchtegehalt der Ausgangssubstanz durch Trocknen bei 105 °C im Trockenschrank oder gleichmäßiges Befeuchten eingestellt und die Zerkleinerung wiederholt werden. 2,50 g der so behandelten Kieselsäure werden bei Raumtemperatur in ein 250 ml Titriergefäß eingewogen und mit 60,0 ml Methanol p. A. versetzt. Nach vollständiger Benetzung der Probe werden 40,0 ml entionisiertes Wasser zugegeben, und man dispergiert mittels eines Ultra Turrax T 25 Rührers (Rührwelle KV-18G, 18 mm Durchmesser) 30 Sekunden lang bei einer Drehzahl von 18 000 U/min. Mit 100 ml entionisiertem Wasser werden die am Gefäßrand und Rührer anhaftenden Probepartikel in die Suspension gespült und in einem thermostatisiertem Wasserbad auf 25 °C temperiert.

Das pH-Messgerät (Fa. KNICK, Typ: 766 pH-Meter Calimatic mit Temperaturfühler) und die pH-Elektrode (Einstabmesskette der Fa. SCHOTT, Typ N7680) werden unter Verwendung von Pufferlösungen (pH 7,00 und 9,00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0,1 mol/l) bzw. Salzsäurelösung (0,1 mol/l) der pH-Wert auf 6,00 eingestellt. Der Verbrauch an KOH- bzw. HCl-Lösung in ml bis pH 6,00 entspricht $V_1$'.

Danach werden 20,0 ml Natriumchlorid-Lösung (250,00 g NaCl p. A. mit entionisiertem Wasser auf 1 l aufgefüllt) zudosiert. Mit 0,1 mol/l KOH wird dann die Titration bis zum pH-Wert 9,00 fortgesetzt. Der Verbrauch an KOH-Lösung in ml bis pH 9,00 entspricht $V_2$'.

Anschliessend werden die Volumina $V_1$', bzw. $V_2$' zunächst auf die theoretische Einwaage von 1 g normiert und mit 5 erweitert, woraus sich VOL 1 und die modifizierte Searszahl Vol 2 in den Einheiten ml/(5 g) ergeben.

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt:

12,50 g pulverförmige oder in etwa sphärischen Partikel aufweisende Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 1 bis 3,15 mm (Edelstahlsiebe der Fa. Retsch) verwendet (durch sanftes Drücken der Granulate mit einem Kunststoffspatel durch das Sieb mit 3,15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0,6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so daß der Verbrauch an DBP in ml abgelesen werden kann.

Die DBP-Aufnahme wird in g/(100 g) angegeben und anhand der folgenden Formel berechnet:

$$DBP = \frac{V * D * 100}{E} * \frac{g}{100\,g} + K$$

mit

DBP = DBP-Aufnahme in g/(100 g)

*V* = Verbrauch an DBP in ml
D = Dichte von DBP in g/ml (1,047 g/ml bei 20 °C)
E = Einwaage an Kieselsäure in g
*K* = Korrekturwert gemäß Feuchtekorrekturtabelle in g/(100 g)

Die DBP-Aufnahme ist für die wasserfreie, getrocknete Kieselsäure definiert. Bei Verwendung von feuchten Fällungskieselsäuren ist der Korrekturwert *K* für die Berechnung der DBP-Aufnahme zu berücksichtigen. Dieser Wert kann anhand der folgenden Korrekturtabelle ermittelt werden, z. B. würde ein Wassergehalt der Kieselsäure von 5,8 % einen Zuschlag von 33 g/(100 g) für die DBP-Aufnahme bedeuten. Die Feuchte der Kieselsäure wird gemäß der Methode "Bestimmung der Feuchte bzw. des Trocknungsverlusts" ermittelt.

Tabelle 1: Feuchtekorrekturtabelle für Dibutylphthalataufnahme (wasserfrei)

| % Feuchte | . % Feuchte<br>, 0 | ,2 | ,4 | ,6 | ,8 |
|---|---|---|---|---|---|
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der BET-Oberfläche**

Die spezifische Stickstoff-Oberfläche (im folgenden BET-Oberfläche genannt) der pulverförmigen, in etwa sphärische Partikel aufweisende oder granulären Kieselsäure wird in Anlehnung an ISO 5794-1/Annex D mit dem Gerät TRISTAR 3000 ( Fa. Micromeritics) nach der Multipointbestimmung gemäß DIN-ISO 9277 ermittelt.

**Bestimmung der CTAB-Oberfläche**

Die Methode beruht auf der Adsorption von CTAB (N-Hexadecyl-N,N,N-trimethylammoniumbromid) an der "äußeren" Oberfläche der Kieselsäure in Anlehnung an die ASTM 3765, bzw. NFT 45-007 (Kapitel 5.12.1.3).

Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23 - 25 °C um das Auskristallisieren von CTAB zu verhindern. Der Rücktitration liegt die folgende Reaktionsgleichung zu Grunde:

$$(C_{20}H_{37}O_4)SO_3Na + BrN(CH_3)_3(C_{16}H_{33}) \Rightarrow (C_{20}H_{37}O_4)SO_3N(CH_3)_3(C_{16}H_{33}) + NaBr$$

NDSS CTAB

Geräte

Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode,
Fabrikat Mettler, Typ DP 550
Titrierbecher 100 ml aus Polypropylen
Titrierglasgefäß, 150 ml mit Deckel
Druckfiltrationsgerät, 100 ml Inhalt
Membranfilter aus Cellulosenitrat, Porengröße 0,1 μm, 47 mm Ø, z. B. Whatman (Best. Nr. 7181-004)

Reagenzien

Die Lösungen von CTAB ($C_{CTAB}$ = 0,015 mol/l in entionisiertem Wasser) und NDSS (Konzentration = 0,00423 mol/l in entionisiertem Wasser) werden gebrauchsfertig bezogen (Fa. Bernd Kraft GmbH, 47167 Duisburg: Bestell-Nr. 6056.4700 CTAB-Lösung der Konzentration 0,015 mol/l; Bestell-Nr. 6057.4700 NDSS-Lösung 0,00423 mol/l), bei 25 °C aufbewahrt und innerhalb von einem Monat aufgebraucht.

Durchführung

**1. Blindtitration**

Der Verbrauch an NDSS-Lösung zur Titration von 5 ml CTAB-Lösung ist 1 x täglich vor jeder Meßreihe zu prüfen. Dazu wird die Phototrode vor Beginn der Titration auf 1000 ± 20 mV eingestellt (entsprechend einer Transparenz von 100 %). Es werden genau 5.00 ml CTAB-Lösung in einen Titrierbecher pipettiert und man fügt 50,0 ml entionisiertes Wasser hinzu. Unter Rühren erfolgt die Titration mit NDSS-Lösung nach der dem Fachmann geläufigen Meßmethode mit dem Titroprozessor DL 55 bis zur max. Trübung der Lösung. Man bestimmt den Verbrauch $V_A$ an NDSS-Lösung in ml. Jede Titration ist als Dreifachbestimmung auszuführen.

**2. Adsorption**

10,0 g der pulverförmigen, der in etwa sphärische Partikel aufweisende oder granulierten Kieselsäure mit einem Feuchtegehalt von 5 ± 2 % (gegebenenfalls wird der Feuchtegehalt durch Trocknen bei 105 °C im Trockenschrank oder gleichmäßiges Befeuchten eingestellt) werden mit einer Mühle (Fa. IKA Mühle M 20 mit Edelstahlschläger M 21) 60 Sekunden lang zerkleinert. Genau 500,0 mg der zerkleinerten Probe (Einwaage E) werden in ein 150 ml Titriergefäß mit Magnetrührstäbchen überführt und es werden genau 100,0 ml CTAB-Lösung ($T_1$) zudosiert. Das Titriergefäß wird mit einem Deckel verschlossen und mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0,1 mol/l) auf einen Wert von 9 ± 0,05 eingestellt.

Es erfolgt eine 4-minütige Beschallung der Suspension in dem Titriergefäß in einem Ultraschallbad (Fa. Bandelin, Sonorex RK 106 S, 35 kHz, 100 W Effektiv bzw. 200 W Spitzenleistung) bei 25 °C. Anschließend erfolgt eine umgehende Druckfiltration durch einen Membranfilter bei einem Stickstoffdruck von 1,2 bar. Der Vorlauf von 5 ml wird verworfen.

**3. Titration**

5,00 ml des übrigen Filtrats werden in einen 100 ml Titrierbecher pipettiert und mit entionisiertem Wasser auf 50,00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_B$ an NDSS-Lösung in ml. Jede Titration ist als Dreifachbestimmung auszuführen.

Berechnung

$$CTAB(nicht\ feuchtekorrigiert) = \frac{V_A - V_B}{V_A} * \frac{C_{CTAB} * M_{CTAB} * T_1 * P}{E}$$

$V_A$ = Verbrauch an NDSS-Lösung in ml bei der Titration der Blindprobe
$V_B$ = Verbrauch an NDSS-Lösung in ml bei Verwendung des Filtrats
$C_{CTAB}$ = Konzentration der CTAB-Lösung in mol/l

$M_{CTAB}$ = Molmasse von CTAB = 364,46 g/mol
$T_1$ = Zugegebene Menge an CTAB-Lösung in l
P = Platzbedarf von CTAB = 578,435 $m^2/g$
E = Einwaage an Kieselsäure

Die CTAB-Oberfläche wird auf die wasserfreie Kieselsäure bezogen, weshalb die folgende Korrektur durchgeführt wird.

$$CTAB = \frac{CTAB(nicht\ feuchtekorrigiert)\ in\ m^2/g\ *\ 100\,\%}{100\,\% - \ Feuchte\ in\ \%}$$

Die Feuchte der Kieselsäure wird gemäß der beschriebenen Methode "Bestimmung der Feuchte" ermittelt.

**Bestimmung der Partikelgrößenverteilung**

Im Folgenden wird der Begriff Partikelgrößenverteilung synonym zu dem Begriff Teilchengrößenverteilung verwandt. Bestimmt wird die Teilchengrößenverteilung von Kieselsäure. Die zu untersuchende Probe wird vermahlen, anschließend in einer wässrigen Lösung dispergiert und in einer Scheibenzentrifuge nach ihrer Teilchengröße aufgetrennt: je größer - und damit schwerer - die Partikel sind, umso schneller bewegen sie sich im Schwerefeld der Zentrifuge. Sie passieren dort eine Lichtschranke; gemessen wird die Absorption als Funktion der Zeit. Aus diesen Daten wird die Teilchengrößenverteilung, d. h. die Häufigkeit als Funktion des Teilchendurchmessers errechnet.

**Verwendete Geräte:**

| | |
|---|---|
| Scheibenzentrifuge | CPS Instruments Inc., Typ DC24000 |
| Utraschallfinger | Hielscher Typ UP200S mit Sonotrode S14 |
| Universalmühle | IKA Typ M20 mit Edelstahlschläger M21 |
| Kühlbad Lauda | Typ RM6 mit Kältethermostat RMS |
| Analysenwaage | |

Spritzen: 1,0 ml und 2,0 ml
Rollrand -Schnappglas weiß; 30 ml; 75 mm x 28 mm;
Hersteller: Firma Scherf Artikelnummer: 47407, Lieferant: J. Fleischhacker GmbH & Co. KG Artikelnummer: 125623075

**Chemikalien:**

Ethanol p. A., Fa. Merck

Wasser, deionisiert

Saccharose, Fa. Acros

Dodecan, Fa. Merck

PVC Referenz Standard; das Peakmaximum des verwendeten Referenz Standards sollte zwischen 500 und 600 nm liegen.

**Vorbereiten der Scheibenzentrifuge**

Die laufende Scheibenzentrifuge wird mit einem Dichtegradienten aus Saccharoselösungen befüllt und mit einer Dodecandeckschicht versehen. Vorgehensweise:

Es werden Zuckerlösungen unterschiedlicher Konzentration hergestellt. Die Massenanteile der Zuckerlösungen liegen hierbei zwischen w = 8,0 % und w = 24,0 %. Der Dichtegradient wird in neun Stufen aufgebaut:

24,0 % / 22,0 % / 20,0 % / 18, 0 % / 16,0 % / 14,0 % / 12,0 % / 10,0 % / 8,0 %

Es werden jeweils 1,6 ml der verschiedenen Zuckerlösungen pro Dichtestufe in die Scheibenzentrifuge injiziert, wobei mit der höchsten Konzentration begonnen wird. Zum Abschluss werden 0,5 ml Dodecan injiziert.

**Probenvorbereitung**

Vor der Dispergierung wird die Kieselsäureprobe gemahlen. Dazu werden 15 g (± 0,5 g) Probenmaterial in der IKA Universalmühle 60 Sekunden gemahlen. Von diesem gemahlenen Material werden 0,75 g (± 0,05 g) in ein 30 ml Rollrand-Schnappglas eingewogen und mit 15 ml deionisiertem Wasser versetzt. Das befüllte Rollrand -Schnappglas wird mit Hilfe einer Stativzange im Kühlbad, welches auf ca. 5 °C temperiert ist, fixiert. Der Ultraschallfinger wird so positioniert, dass die Sonotrode 5,5 cm (mindestens jedoch 5 cm) tief in das Fläschchen eintaucht - vom oberen Rand des Rollrandfläschchens aus gemessen. Die Probe wird 15 Minuten mit 100 % Amplitude und 100 % Puls (Cycle = 1) beschallt.

**Durchführung**

Vor Beginn der Messungen lässt man die Zentrifuge mindestens 30 min bei der voreingestellten Geschwindigkeit (20000 UPM) warmlaufen. Alle Messungen laufen ebenfalls bei einer Umdrehungsgeschwindigkeit von 20000 UPM. In der Gerätesoftware wird die Messprozedur aufgerufen. Für die Messungen sind folgende Parameter einzustellen:

Sample Parameters:

| | |
|---|---|
| Maximum Diameter: | 5,10 microns |
| Minimum Diameter: | 0,01 microns |
| Particle Density: | 2,0 g / ml |
| Particle Refractive Index: | 1,44 |
| Particle Absorption: | 0,001 K |
| Non-Sphericity Factor: | 1,1 |

Calibration Standard Parameters (abhängig von dem verwendeten Kalibrierstandard):

Beispiel:

| | |
|---|---|
| Peak Diameter: | 0,585 microns |
| Half Height Peak Width: | 0,2 microns |
| Particle Density: | 1,385 g / ml |

Fluid Parameters:

| | |
|---|---|
| Fluid Density: | 1,045 g / ml |
| Fluid Refractive Index: | 1,344 |
| Fluid Viscosity: | 1,2 cps |

In dem Untermenü "System Configuration" wird die Messwellenlänge auf 470 nm eingestellt.

In dem Untermenü "Runtime Options" werden folgende Parameter eingestellt:

| | |
|---|---|
| Force Baseline: | Yes |
| Correct for Non-Stokes: | No |
| Extra Software Noise Filtration: | No Extra Filter |
| Baseline Drift Display: | Do Not Show |

(fortgesetzt)

| | |
|---|---|
| Calibration method: | External |
| Samples per calibration: | 1 |

Zur Messung der Probendispersion wechselt man in das Untermenü "Operate Analyser". Die für die Messung erforderlichen Schritte werden in der "Instructions"-Zeile nacheinander abgefragt. Vor jeder Messung ist ein Kalibrierstandard aufzunehmen. Es werden jeweils 0,1 ml des Standards bzw. der Probendispersion injiziert. Von jeder zu untersuchenden Probe wird eine Doppelbestimmung (inkl. Dispergierung mittels Ultraschall) durchgeführt.
Die Messungen an den zu analysierenden Kieselsäuredispersionen werden manuell an dem Punkt abgebrochen, an dem die Absorption, nach der Aufnahme des zu analysierenden Peaks, der in der Regel zwischen 30 nm bis 250 nm liegen sollte, wieder das Ausgangsniveau, in der Regel 0, erreicht.

**Ergebnis**

Aus der Rohdatenkurve (korrigiert um die Lichtstreuung) wird die Gewichtsverteilung (weight distribution) von der Gerätesoftware (CPS Disc Centrifuge Operating Software; Version 9.5b; Released February 2006) ermittelt. Die Ergebnisse ergeben sich jeweils aus den aus der Doppelbestimmung gemittelten Werten.

Angegeben werden:

**Peak (Mode),** Einheit μm, häufigste Teilchengröße, entspricht dem Abszissenwert des Maximums der Verteilungsfunktion. Dieser Wert wird von der Gerätesoftware berechnet.
**Halbwertsbreite (Half Width),** Einheit μm, entspricht der Breite der Verteilungsfunktion bei 50 % von deren Maximalwert. Dieser Wert wird von der Gerätesoftware berechnet.
**Oversize Percentiles,** Einheit μm, entspricht dem angegebenen Anteil (1 %, 5 %, 10 %, 25 %, 50 %, 75 %, 90 %, 95 %, 99 %) der Partikel, die größer sind als der angegebene Partikeldurchmesser der Gewichtsverteilung. Diese Werte werden von der Gerätesoftware berechnet.
**Quartile ratio 25 % / 75 %,** keine Einheit, ein weiteres Maß für die Breite der Verteilung, gebildet aus dem Verhältnis der Partikelgrößen bei 25 % bzw. 75 %, abzulesen aus den Parametern Oversize Percentiles. Dieser Wert muss manuell berechnet werden.
**Half Width / Peak,** keine Einheit, der Quotient aus den Angaben der Halbwertsbreite und des Peaks muss manuell berechnet werden.

**Bestimmung der Partikelgröße mittels Laserbeugung**

Die Anwendung der Laserbeugung zur Bestimmung von Teilchengrößen von Pulvern basiert auf der Erscheinung, dass Teilchen monochromatisches Licht mit unterschiedlichem Intensitätsmuster in alle Richtungen streuen. Diese Streuung ist abhängig von der Teilchengröße. Je kleiner die Teilchen, desto größer sind die Streuungswinkel.
Die Probenvorbereitung und Messung (Spülen des Moduls, ect.) erfolgt im Fall hydrophiler Fällungskieselsäure mit VE Wasser, im Fall nicht ausreichend mit Wasser benetzbarer Fällungskieselsäure mit reinem Ethanol.
Vor Beginn der Messung lässt man das Laserbeugungsgerät LS 230 (Fa. Coulter) und das Flüssigkeitsmodul (Small Volume Module Plus, 120 ml, Fa. Coulter) 2 h warmlaufen, spült das Modul dreimal mit VE Wasser, kalibriert es und spült im Falle hydrophober Fällungskieselsäuren dreimal mit Ethanol. In der Steuerleiste der Gerätesoftware wählt man über dem Menüpunkt "Messung" das Dateifenster "Opt. Modell berechnen" aus und legt die Brechungsindizes in einer .rfd-Datei fest: Flüssigkeitsbrechungsindex B. I. Real = 1,332 (1,359 für Ethanol); Material Brechungsindex Real = 1,46; Imaginär = 0,1; Formfaktor 1. Zusätzlich wählt man in diesem Dateifenster die folgenden Punkte aus: Offsetmessung, Justieren, Hintergrundmessung, Messkonz. einstellen, Probeninfo eingeben, Messinfo eingeben, Messzeit 60 s, Anzahl Messungen 1, ohne PIDS Daten, Größenverteilung. Die Pumpengeschwindigkeit wird am Gerät auf 30 % eingestellt.
Es erfolgt die Zugabe der homogenen Suspension von 1 g Kieselsäure in 40 ml VE Wasser mit einer 2 ml Einwegpipette in das Flüssigkeitsmodul des Gerätes in der Art, dass eine konstante Konzentration mit einer Lichtabsorption von 8 bis 12 % erreicht wird und das Gerät "OK" meldet. Die Messung erfolgt bei Raumtemperatur. Aus der Rohdatenkurve berechnet die Software auf Basis der Volumenverteilung unter Berücksichtigung der Mie-Theorie und der optischen Modellparameter (.rfd-Datei) die Teilchengrößenverteilung und den d50-Wert (Medianwert).

**Bestimmung des Siebrückstands (Alpine)**

Bei dieser Siebrückstandsbestimmung handelt es sich um eine Luftstrahlsiebung in Anlehnung an DIN ISO 8130-1 mittels eines Luftstrahlsiebgeräts S 200 der Fa. Alpine. Zur Bestimmung des $d_{50}$-Werte von Mikrogranulaten und Granulaten werden dazu auch Siebe mit einer Maschenweite > 300 μm eingesetzt. Um den $d_{50}$-Wert zu ermitteln, müssen die Siebe so gewählt werden, dass sie eine Partikelgrößenverteilung liefern, aus der der $d_{50}$-Wert gemäß Figur 2 bestimmt werden kann. Die grafische Darstellung und Auswertung erfolgt analog zu ISO 2591-1, Kapitel 8.2.

Unter dem $d_{50}$-Wert ist der Partikeldurchmesser in der kumulativen Partikelgrößenverteilung zu verstehen, bei der 50% der Partikel einen geringeren oder gleichen Partikeldurchmesser aufweisen als/wie die Partikel mit dem Partikeldurchmesser des $d_{50}$-Wertes.

**Bestimmung des Siebrückstands (Ro-Tap)**

Mit dieser Methode wird der Anteil gröberer Partikel (> 300 μm) und der Anteil feinerer Partikel (< 75 μm) von Granulaten mittels Siebung bestimmt.

Es werden eine Siebpfanne, ein Analysensieb mit Metallsiebgewebe (DIN ISO 565 T.2, Nennmaschenweite 75 μm), ein Analysensieb mit Metallsiebgewebe (DIN ISO 565 T.2, Nennmaschenweite 150 μm), sowie ein Analysensieb mit Metallsiebgewebe (DIN ISO 565 T.2, Nennmaschenweite 300 μm) mit jeweils 200 mm Siebdurchmesser verwendet. Der Siebturm wird in der genannten Reihenfolge in eine Analysensiebmaschine Ro-Tap B 8260 mit Zeitschaltuhr der Firma Tyler eingebracht und eine homogene Probenmenge von 100,00 g der Kieselsäuregranulate wird auf das oberste Sieb überführt. Der Siebdeckel und der Klopfer werden aufgesetzt und die Siebung erfolgt mit einer Kreis- und Klopfbewegung für 5 min.

Die Siebrückstände (Ro-Tap) werden bestimmt gemäß

$$\text{Siefraktion (Ro-Tap, < 75 µm) in \%} = (A_S/E) * 100 \%,$$

sowie

$$\text{Siebrückstand (Ro-Tap, > 300 µm) in \%} = (A_{300}/E) * 100 \%,$$

mit

$A_S$ = Auswaage des Rückstands in der Siebpfanne in g,
$A_{300}$ = Auswaage des Rückstands auf dem Sieb mit 300 μm Nennmaschenweite in g
und E = Einwaage in g.

**Bestimmung des Aluminiumoxidgehalts**

Die Bestimmung des Aluminiumoxidgehalts erfolgt in Anlehnung an DIN EN ISO 3262-18 mittels Flammenatomadsorptionsspektrometrie bei einer Wellenlänge von 309,3 nm. Ca. 20 g einer Kieselsäure werden auf 0,01 g genau in einen Platintiegel eingewogen und mit destillierten Wasser befeuchtet. 1 ml konz. Flusssäure (40 %, p.a.) wird zugefügt und die Mischung wird in einem Sandbad bis zum Abrauchen erhitzt. Nach und nach wird Salpetersäure tropfenweise zugegeben, bis die Kieselsäure komplett aufgelöst ist. Nach Eindampfen bis zur Trockene wird der Rückstand in 3 ml konz. Salzsäure gelöst. Die abgekühlte Lösung wird quantitativ in einen 100 ml-Meßbecher überführt und dort auf 100 ml mit destilliertem Wasser aufgefüllt.

Die so hergestellte Lösung wird gemäß der Bedienungsanleitung in einem Flammenatomadsorptionsspektrometer untersucht (Wellenlänge: 309,3 nm, Slit S: 0,7 nm, Gasstrom: Acetylen/$N_2O$). Die Bestimmung des Aluminiumoxidgehaltes erfolgt an der Originalprobe, der Gehalt wird jedoch auf die für 2 h bei 1000 °C geglühte Probe bezogen:

$$\% \, Al_2O_{3\,\text{bezogen auf geglühte Substanz}} = \frac{\% \, Al_2O_{3\,\text{bezogen auf Originalsubstanz}} \times 100}{100\,\% - \text{Glühverlust in } \%} .$$

**<u>Bestimmung der Porengrößenverteilung</u>**

**Vorbehandlung der Kieselsäuren vor der Quecksilberporosimetrie**

Die Kieselsäure wird vor der Messung einer Druckbehandlung unterzogen. Genutzt wird hierzu eine Manual Hydraulic Press (Bestell-Nr. 15011 der Fa. Specac Ltd., River House, 97 Cray Avenue, Orpington, Kent BR5 4HE, U.K.). Dabei werden in eine "Pellet Die" mit 13 mm Innendurchmesser der Fa. Specac Ltd. 250 mg Kieselsäure eingewogen und laut Anzeige mit 1 t belastet. Diese Last wird 5 s gehalten und gegebenenfalls nachgeregelt. Die Nachregelung erfolgt derart, dass im Falle eines Druckabfalls, zu erkennen an der sinkenden Lastanzeige unter 1 t, der Druck während der fünf sekündlichen Abpressphase vom Operator wieder aufgebaut werden muss und so bei möglichst permanent gleichbleibender Last gepresst wird. Die Nachregelung muss umgehend erfolgen, sobald die Druckanzeige unter 1 t sinkt. Anschließend wird die Probe entspannt und für 4 h bei 105 $\pm$ 2 °C in einem Umlufttrockenschrank getrocknet.

**Durchführung der Quecksilberporosimetrie Messung**

Die Methode basiert auf der Hg-Intrusion gemäß DIN 66133, wobei ein Autopore IV 9500-Gerät der Firma Micromeritics verwendet wird. Die Einwaage der Kieselsäure in den Penetrometer vom Typ 10 (Artikelnummer des Penetrometers der Fa. Micromeritics ist 950-61710-00) erfolgt auf 0,001 g genau. Anschließend wird das Penetrometer langsam auf 50 mm Hg-Säule evakuiert und für 5 min bei diesem Druck belassen. Die Bedienung des Autopore-Geräts erfolgt gemäß der Bedienungsanleitung mit der Software Version IV 1.05. Jede Messung wird um eine Leermessung des Penetrometers korrigiert. Der Messbereich beträgt 0,0025 - 420 MPa, wobei mindestens 136 Gleichgewichtsmesspunkte (gerätespezifisches Kriterium von 10 s) verwendet werden (im Bereich 0,0025 - 0,25 MPa: 30 Punkte, im Bereich 0,25 - 15 MPa: 53 Punkte, 15 - 150 MPa: 40 Punkte, im Bereich 150 - 420 MPa: 13 Punkte). Ggf. fügt die Software weitere Messpunkte ein, wenn dass inkrementelle Intrusionsvolumen > 0,04 ml/g beträgt. Es wird eine Intrusionskurve erhalten, wobei die Intrusionskurve die Abbildung einer Funktion V(d), welche für jeden Durchmesser (d) als Wert die bis zu diesem Durchmesser eingebrachte spezifische Quecksilbermenge (V) hat, darstellt. Die Einheiten von V(d) sind ml/g. Die Glättung der Intrusionskurve erfolgt mittels der "smooth differentials"-Funktion der Gerätesoftware.

**Ermittlung des Feinheitsindex F.V. (mit Druckvorbehandlung),** Einheit Ä

Der Feinheitsindex F.V. repräsentiert den mittleren Radius der Intra-Aggregatporen, d.h. den Radius der Poren, dem die Porenoberfläche $S_0/2$, gemessen durch Quecksilberporosimetrie wie oben angegeben, entspricht ($S_0$ ist die Oberfläche, die durch alle Poren, deren Durchmesser über oder gleich 100 Ä beigetragen wird). Für die Berechnung des Feinheitsindex F.V. (gepresst) (Finess Value; gepresst) wird wie folgt vorgegangen. Es wird eine Kurve **A**(r) der

Porenoberflächenverteilung, berechnet wie in der DIN 66133 (in Kraft seit 1993) ausgeführt, über den Porenradius r, welcher aus der WASHBURN Gleichung bestimmt wird, dargestellt. Dabei wird für die Berechnungen ein Kontaktwinkel 140° und eine Oberflächenspannung von 484 mN/m angenommen.

**B**(r) ist das Integral der Porenoberflächenverteilung von r bis $\infty$. Wobei $\infty$ in diesem Zusammenhang bedeutet dass der Anfangsdruck für die Quecksilberporosimetrie Messung bei 4.2 kPa Absolutdruck liegt. Figur 3 ist eine graphische Darstellung der oben beschriebenen Zusammenhänge.

Es gelten Gleichungen 1-3.

$$\mathbf{B}(r) = \int_r^{\infty} \mathbf{A}(R)dR \qquad (1)$$

$$S_0 = \mathbf{B}(5\,\mathrm{nm}) \qquad (2)$$

$$\frac{S_0}{2} = \mathbf{B}(F.V.) \qquad (3)$$

Die Beziehung zwischen **A**(r) und **B**(r) ist durch Gl. 1 gegeben und in Figur 3 graphisch für r = 5 nm dargestellt. Die schraffierte Fläche unter der **A**(r) Kurve entspricht dem Wert von $S_0$ = **B**(r) bei r = 5 nm (Durchmesser von 100 Ä). Die Pfeile deuten an dass die Werte, für die dem Pfeil am nächsten liegende Kurve **A**(r) oder **B**(r), von der Achse auf die der Pfeil zeigt abgelesen werden können.

$S_0$ ist das Integral der Porenoberflächenverteilung über den Radius r für Poren mit Durchmesser größer oder gleich 100 Å (10 nm) (Gleichung 2).

Der Feinheitsindex F.V. (gepresst) (Finess Value; gepresst) ist dann der größte Radius bei dem das Integral der Porenoberflächenverteilung über den Radius den Wert $S_0/2$ annimmt (Gleichung 3).

**Bestimmung des Porenvolumenverhältnis V2 / V1 (mit Druckvorbehandlung)**

**Porenvolumenverhältnis V2 / V1,** keine Einheit

Zur Berechnung wird ein Kontaktwinkel 130 ° und eine Oberflächenspannung von 484 mN/m angenommen. Das Porenvolumen V1 ergibt sich aus dem kumulierten Porenvolumen im Porendurchmesserbereich von 5,5 - 40 nm. Das Porenvolumen V2 ergibt sich aus dem kumulierten Porenvolumen im Porendurchmesserbereich von 17,5 - 27,5 nm. Der Anteil der Poren in dem Bereich V2 ergibt sich aus dem Quotient V2 / V1.

**Bestimmung der relativen Breite $\gamma$ der Porengrößenverteilung (mit Druckvorbehandlung)**

**relative Breite $\gamma$,** Einheit (g nm)/ml

Zur Berechnung wird ein Kontaktwinkel 140 ° und eine Oberflächenspannung von 480 mN/m angenommen. Um die relative Breite $\gamma$ der Porengrößenverteilung zu bestimmen, wird auf die Daten der negativen logarithmischen Ableitung der Intrusionskurve im Porendurchmesserbereich von 3,5 nm bis 5 $\mu$m der folgende Algorithmus angewendet: Der Algorithmus benutzt ein von großen Porendurchmessern kommendes, bewegliches Fenster aus drei aufeinanderfolgenden Messpunkten der negativen logarithmischen Ableitung der Intrusionskurve und legt eine Parabel durch die Punkte. Das Maximum der Parabel wird als das gesuchte Maximum A bei einem Porendurchmesser a definiert. Es wird kontrolliert, ob der Punkt a im gesuchten Porendurchmesserbereich liegt und das globale Maximum der negativen logarithmischen Ableitung der Intrusionskurve darstellt. Wenn dies nicht der Fall ist, wird das Fenster um einen Punkt verschoben, erneut eine Parabel durchgelegt, und der Vorgang solange wiederholt bis beide Kriterien erfüllt sind. Dann wird B als 0,300 A definiert. b stelle den Porendurchmesser der Kurve dar, der kleiner als a ist, an dem zum ersten Mal der Wert B erreicht wird. Schließlich wird die relative Breite $\gamma$ der Porengrößenverteilung definiert als $\gamma$ = (a-b)/(A-B) = (a-b)/(0,7 A), wobei a und b die Einheiten Nanometer und $\gamma$ die Einheit (g nm)/ml aufweisen. Ein typischer Kurvenverlauf der negativen logarithmischen Ableitung des kumulierten Porenvolumens V gemäß Gleichung 1 hinsichtlich des Porendurchmessers x mit i Messpunkten und den Merkmalen a, *b,* A sowie B ist in Figur 2 dargestellt.

Gleichung 1:

$$\frac{dV}{d\log x} = \frac{dV}{\frac{1}{x}dx} = x\frac{dV}{dx}$$

$$x\frac{dV}{dx} \approx x\frac{\Delta V}{\Delta x}\bigg|_{\Delta x = x_i - x_{i-1}} = x_i\frac{V_i - V_{i-1}}{x_i - x_{i-1}} \approx x_i\frac{V_{i+1} - V_{i-1}}{x_{i+1} - x_{i-1}}$$

**Bestimmung des Morphologieindex**

Die Messungen wurden durchgeführt unter Anwendung eines FISONS HRGC Mega 2-Gerätes, ausgerüstet mit einem Flammenionisationsdetektor (FID).

Die Kieselsäure wurde 2 Minuten lang bei einer Last von 2 Tonnen mit einer hydraulischen Laborpresse von ICL (International Crystal Laboratories) gepresst, um ein einzelnes rundes Pellet von einem Durchmesser von 13 mm und einer Höhe von 5 mm zu erzeugen.

Dieses Pellet wird dann 30 Sekunden manuell mit einem Stößel in einem Achatmörser zerstampft (30 mL Kapazität, 65 mm interner Durchmesser). Das zerstampfte Material wird dann durch 2 Edelstahlsiebe mit einem Durchmesser von 100 mm und einer Höhe von 45 mm der Firma Bioblok Scientific manuell gesiebt. Die Maschen der Siebe sind 0,425 mm (Mesh 40) und 0,106 mm (Mesh 140). Die Siebe sind in der Reihenfolge abnehmender Maschenweite angeordnet. Unterhalb des letzten Siebes befindet sich eine Auffangschale.

Diese Prozedur wird mit mehreren Pellets wiederholt, bis genügend Material vorhanden ist, um die Säule zu füllen. Das Material, das auf dem Sieb mit der Maschenweite von 0,106 mm verbleibt (Siebfraktion von 0,425 bis 0,106

mm) wird verwendet, um die Säule zu füllen.

Die chromatographische Säule wird folgendermaßen vorbereitet: eine Edelstahlröhre von 1/8"-Durchmesser wird auf die erforderliche Länge abgeschnitten. Die Länge der Säule hängt von der spezifischen Oberfläche des zu untersuchenden Feststoffes ab. Hierbei gilt: Die Menge an Feststoff in der Säule muß eine Oberfläche von 20 bis 40 $m^2$ aufweisen. Hersteller dieser Röhren ist Interchrom.

Das vorbereitete Pulver (siehe obige Beschreibung) wird homogen in die chromatographische Säule durch einen konischen Trichter eingefüllt. Es muß darauf geachtet werden, dass keine Hohlräume in der Schüttung entstehen.

Der Flammenionisationsdetektor wird bei 150°C betrieben, der Injektor auf 120°C geheizt. Vor der Untersuchung wird die Säule ausgeheizt, indem sie bei 160°C bei einem Helium-Fluss von 15 ml/min für 15 Stunden ausgeheizt wird. Die Bestimmung der Geraden der n-Alkane und der Oberflächennanorauhigkeit wird bei 110°C unter einer Helium-Fluss-Rate von 20 ml/min durchgeführt. Für den Flammenionisationsdetektor wird die empfindlichste Einstellung des Detektors gewählt.

Die linearen Alkane, die für die Bestimmung der Geraden genutzt wurden, sind n-Heptan, n-Octan, n-Nonan und n-Decan (siehe Figur 2). Mindestens 3 Injektionen werden für jede Lösung vorgenommen, die Netto-Retentionszeiten ermittelt und die Werte gemittelt.

Die Netto-Retentionszeit jeder Lösung ergibt sich aus der Differenz von Bruttoretentionszeit und Totzeit. Für die Totzeit wird die Bruttoretentionszeit von Methan zugrunde gelegt. Die Bruttoretentionszeiten entsprechen der Retentionszeit des Schwerpunkts des chromatographischen Peak (nicht von der Peakspitze).

Hierbei ist es wichtig, dass die Netto-Retentionszeiten von der eingespritzten Menge unabhängig sind (das ist der Nachweis, dass unter den Bedingungen der unendlichen Verdünnung gemessen wird).

Die verzweigten und zyklischen Alkan-Proben für die Bestimmung der Nanorauigkeit sind 2,2,4-Trimethylpentan, 2,2-Dimethylhexan und Cyclooctan. Der Morphologie-Index (IM) wird berechnet aus dem Verhältnis des Retentionsvolumens des jeweiligen verzweigten oder zyklischen Alkans $V_G(M)$ und des

Retentionsvolumens eines n-Alkans $V_G(C)$, das die gleiche Zugänglichkeit zur Silica Oberfläche aufweist:

$$IM = V_G(M) / V_G(C)$$

Auf diese Weise wird für 2,2,4-Trimethylpentan, 2,2-Dimethylhexan und Cyclooctan jeweils ein IM bestimmt. Der in den Ansprüchen und der Beschreibung angegeben IM entspricht dem Mittelwert der drei zuvor bestimmten Morphologieindices für 2,2,4-Trimethylpentan, 2,2-Dimethylhexan und Cyclooctan.

Alle injizierten Lösungen haben chromatographische Qualität. Zum Einsatz kamen folgende Produkte:

n-Heptan, für HPLC, ≥ 99.5% (GC), FLUKA

n-Octan, puriss. p.a., Standard für GC, ≥ 99.8% (GC), FLUKA

n-Nonan, puriss. p.a., Standard für GC, ≥ 99.8% (GC), FLUKA

n-Decan, puriss. purum, ≥ 98.0% (GC), FLUKA

Cyclooctan, purum, ≥ 99.0% (GC), FLUKA

2,2,4-Trimethylpentan, für HPLC, ≥ 99.5% (GC), FLUKA

2,2-Dimethylhexan, purum, ~ 98.0% (GC), FLUKA

Die folgende Beispiele sollen die Erfindung näher erläutern, ohne ihren Umfang zu beschränken.

## Beispiel 1

In einem Doppelmantel-Reaktor (Höhe 1,60 m, Innendurchmesser 1,60 m) aus rostfreiem Edelstahl mit Klöpperboden und MIG-Schrägblattrührsystem werden 1552 l Wasser sowie 141,3 kg Wasserglas (Dichte 1,348 kg/l, 27,0 Gew.-% $SiO_2$, 8,05 Gew.-% $Na_2O$) vorgelegt. Anschließend werden unter Rühren bei einer Temperatur von 83 °C für 80 min 5,53 kg/min des oben genannten Wasserglases und ca. 0,65 kg/min Schwefelsäure (Dichte 1,83 kg/l, 96 Gew.-% $H_2SO_4$) gleichzeitig zudosiert. Die Schwefelsäuredosierung wird so geregelt, dass in dem Reaktionsmedium über die gesamte Dauer der Zudosierung eine AZ-Zahl von 20,0 +/- 0,2 herrscht. Die Wasserglaszugabe wird gestoppt und die

Schwefelsäure mit 0,60 kg/min weiter zugeführt, bis ein pH von 9,0 (gemessen bei Raumtemperatur) erreicht ist. Im direkten Anschluss wird die Suspension auf 90 °C aufgeheizt und 60 min bei dieser Temperatur gerührt. Die Schwefelsäurezugabe von 0,60 kg/min wird wieder aufgenommen bis ein pH von 7,0 (gemessen bei Raumtemperatur) erreicht wird. Mit einer Schwefelsäurezugabe von 0,3 kg/min wird der End-pH-Wert der Suspension von 4,0 (gemessen bei Raumtemperatur) eingestellt.

Die erhaltene Suspension wird mit einer Membranfilterpresse filtriert und der Filterkuchen mit Wasser gewaschen. Der Filterkuchen mit 22,5 Gew.-% Feststoffgehalt wird anschliessend spinflashgetrocknet. Die Walzengranulation erfolgt mit einer Walzenpresse des Typs WP 50N/75 der Fa. Alexanderwerk AG. Dabei wird das pulverförmige Produkt ohne weitere Zugabe von Bindemitteln oder Flüssigkeiten über ein horizontales Einspeisesystem mit Einfachschnecke (Drehzahl 120 U/min) durch ein Vakuumsystem entlüftet (Unterdruck 0,65 bar) und gleichmäßig zwischen die beidseitig gelagerten, vertikal angeordneten Walzen eingebracht. Bei einer Drehzahl von 13 U/min und einem Druck von 9 bar wird das Pulver zu einer Schülpe verpresst und mittels eines Brechers (Maschenweite 8 mm) zerkleinert. Der Feinanteil (ca. 20 Gew.-%) wird mit einem Zickzack Sichter abgetrennt und in die Pulveraufgabe zurückgeführt.

Die physikalisch-chemischen Daten einer repräsentativen Probe des Granulats (Beispiel 1) sind in Tabelle 2 aufgelistet.

**Beispiel 2**

In einem Doppelmantel-Reaktor (Höhe 1,60 m, Innendurchmesser 1,60 m) aus rostfreiem Edelstahl mit Klöpperboden und MIG-Schrägblattrührsystem werden 1552 l Wasser sowie 141,3 kg Wasserglas (Dichte 1,348 kg/l, 27,0 Gew.-% $SiO_2$, 8,05 Gew.-% $Na_2O$) vorgelegt. Anschließend werden unter Rühren und zusätzlicher Scherung mittels einer Ekato Fluid-Scherturbine bei einer Temperatur von 83 °C für 80 min 5,53 kg/min des oben genannten Wasserglases und ca. 0,65 kg/min Schwefelsäure (Dichte 1,83 kg/l, 96 Gew.-% $H_2SO_4$) gleichzeitig zudosiert. Die Schwefelsäuredosierung erfolgt auf die Turbinenscheibe und wird so geregelt, dass in dem Reaktionsmedium über die gesamte Dauer der Zudosierung eine AZ-Zahl von 20,0 +/- 0,2 herrscht. Die Wasserglaszugabe wird gestoppt und die Schwefelsäure mit 0,60 kg/min weiter zugeführt, bis ein pH von 9,0 (gemessen bei Raumtemperatur) erreicht ist. Im direkten Anschluss wird die Suspension auf 90 °C aufgeheizt und 60 min bei dieser Temperatur gerührt. Die Turbine wird ausgeschaltet und die Schwefelsäurezugabe von 0,60 kg/min wieder aufgenommen bis ein pH von 7,0 (gemessen bei Raumtemperatur) erreicht wird. Mit einer Schwefelsäurezugabe von 0,3 kg/min wird der End-pH-Wert der Suspension von 4,0 (gemessen bei Raumtemperatur) eingestellt.

Die erhaltene Suspension wird mit einer Membranfilterpresse filtriert und der Filterkuchen mit Wasser gewaschen. Der Filterkuchen mit 22,5 Gew.-% Feststoffgehalt wird anschliessend spinflashgetrocknet. Die Walzengranulation erfolgt mit einer Walzenpresse des Typs WP 50N/75 der Fa. Alexanderwerk AG. Dabei wird das pulverförmige Produkt ohne weitere Zugabe von Bindemitteln oder Flüssigkeiten über ein horizontales Einspeisesystem mit Einfachschnecke (Drehzahl 120 U/min) durch ein Vakuumsystem entlüftet (Unterdruck 0,65 bar) und gleichmäßig zwischen die beidseitig gelagerten, vertikal angeordneten Walzen eingebracht. Bei einer Drehzahl von 13 U/min und einem Druck von 9 bar wird das Pulver zu einer Schülpe verpresst und mittels eines Brechers (Maschenweite 8 mm) zerkleinert. Der Feinanteil (ca. 20 Gew.-%) wird mit einem Zickzack Sichter abgetrennt und in die Pulveraufgabe zurückgeführt.

Die physikalisch-chemischen Daten einer repräsentativen Probe des Pulvers (Beispiel 2b) und des Granulats (Beispiel 2a) sind in Tabelle 2 aufgelistet.

**Beispiel 3**

In einem Doppelmantel-Reaktor (Höhe 1,60 m, Innendurchmesser 1,60 m) aus rostfreiem Edelstahl mit Klöpperboden und MIG-Schrägblattrührsystem werden 1552 l Wasser sowie 141,3 kg Wasserglas (Dichte 1,348 kg/l, 27,0 Gew.-% $SiO_2$, 8,05 Gew.-% $Na_2O$) vorgelegt. Anschließend werden unter Rühren bei einer Temperatur von 84 °C für 80 min 5,53 kg/min des oben genannten Wasserglases und ca. 0,65 kg/min Schwefelsäure (Dichte 1,83 kg/l, 96 Gew.-% $H_2SO_4$) gleichzeitig zudosiert. Die Schwefelsäuredosierung wird so geregelt, dass in dem Reaktionsmedium über die gesamte Dauer der Zudosierung eine AZ-Zahl von 20,0 +/- 0,2 herrscht. Die Wasserglaszugabe wird gestoppt und die Schwefelsäure mit 0,60 kg/min weiter zugeführt, bis ein pH von 9,0 (gemessen bei Raumtemperatur) erreicht ist. Im direkten Anschluss wird die Suspension auf 90 °C aufgeheizt und 60 min bei dieser Temperatur gerührt. Die Schwefelsäurezugabe von 0,60 kg/min wird wieder aufgenommen bis ein pH von 7,0 (gemessen bei Raumtemperatur) erreicht wird. Mit einer Schwefelsäurezugabe von 0,3 kg/min wird der End-pH-Wert der Suspension von 3,0 (gemessen bei Raumtemperatur) eingestellt.

Die erhaltene Suspension wird mit einer Membranfilterpresse filtriert und der Filterkuchen mit Wasser gewaschen. Der Filterkuchen mit 24,5 Gew.-% Feststoffgehalt wird anschliessend spinflashgetrocknet. Die Walzengranulation erfolgt mit einer Walzenpresse des Typs WP 50N/75 der Fa. Alexanderwerk AG. Dabei wird das pulverförmige Produkt ohne weitere Zugabe von Bindemitteln oder Flüssigkeiten über ein horizontales Einspeisesystem mit Einfachschnecke

(Drehzahl 120 U/min) durch ein Vakuumsystem entlüftet (Unterdruck 0,67 bar) und gleichmäßig zwischen die beidseitig gelagerten, vertikal angeordneten Walzen eingebracht. Bei einer Drehzahl von 13 U/min und einem Druck von 12 bar wird das Pulver zu einer Schülpe verpresst und mittels eines Brechers (Maschenweite 8 mm) zerkleinert. Der Feinanteil (ca. 20 Gew.-%) wird mit einem Zickzack Sichter abgetrennt und in die Pulveraufgabe zurückgeführt.

Die physikalisch-chemischen Daten einer repräsentativen Probe des Granulats (Beispiel 3) sind in Tabelle 2 aufgelistet.

Die physikalischen Daten der obigen Kieselsäuren sind in der folgenden Tabelle 2 zusammengestellt. Als Referenzwerte werden die Daten der beiden gefällten Kieselsäuren Ultrasil 7000 GR (Evonik Degussa GmbH; Referenz 1) und Zeosil 1165 MP (Rhodia Deutschland GmbH; Referenz 2) dargestellt.

**Tabelle 2:**

| Physikalisch chemische Daten der erfindungsgemäßen Kieselsäuren sowie der Vergleichskieselsäuren | | | | | | | |
|---|---|---|---|---|---|---|---|
| | | **Referenz 1** | **Referenz 2** | **Beispiel 1** | **Beispiel 2a** | **Beispiel 2b** | **Beispiel 3** |
| BET | $m^2/g$ | 173 | 152 | 185 | 185 | 183 | 170 |
| CTAB | $m^2/g$ | 157 | 159 | 177 | 174 | 176 | 162 |
| DBP | g/(100 g) | 235 | 240 | 221 | 216 | 261 | 222 |
| modifizierte Searszahl Vol 2 | ml/(5 g) | 15,9 | 20,2 | 25,8 | 25,2 | 25,1 | 26,3 |
| **CPS Disc Centrifuge** | | | | | | | |
| half width / peak | | 1,07 | 0,91 | 0,82 | 0,79 | 0,84 | 0,78 |
| Verhältnis d 25 % / d75 % | | 1,86 | 1,70 | 1,63 | 1,58 | 1,63 | 1,57 |
| **Hg Porosimetrie mit Druckvorbehandlung** | | | | | | | |
| relative Breite Y(gepreßt) | nm g/ml | 3,20 | 3,09 | 2,06 | 1,89 | 1,89 | 2,27 |
| V2/V1 (gepreßt) | | 0,65 | 0,68 | 0,46 | 0,36 | 0,39 | 0,71 |
| Feinheitsindex F.V. (gepreßt) | Å | 123 | 129 | 105 | 101 | 102 | 128 |
| **Hg Porosimetrie ohne Druckvorbehandlung** | | | | | | | |
| relative Breite Y | nm g/ml | 3,61 | 4,60 | 2,43 | 1,93 | 2,39 | 2,07 |
| V2/V1 | | 0,57 | 0,55 | 0,61 | 0,64 | 0,65 | 0,72 |
| Feinheitsindex F.V. | Å | 145 | 148 | 119 | 119 | 130 | 137 |
| Morphologieindex IM (Mittelwert) | | 0,85 | 0,86 | 0,66 | 0,63 | 0,62 | 0,69 |

**Beispiel 4:**

**Anwendungstechnische Testung**

Für die Herstellung der Kautschukmischungen und Vulkanisate werden die Beispiele 1, 2a und 3 verwendet.

<u>Allgemeine Durchführungsvorschrift:</u>

Die für die Gummimischungen verwendete Rezeptur (Green Tire Compound) ist in folgender Tabelle 3 angegeben. Dabei bedeutet die Einheit [phr] Gewichtsanteile bezogen auf 100 Teile des eingesetzten Rohkautschuks.

Tabelle 3:

| Rezeptur einer Green Tire Mischung | | | |
|---|---|---|---|
| **Substanz** | **phr** | **Artikelbezeichnung** | **Firma** |
| **1. Stufe** | **Grundmischen** | | |
| Buna VSL 5025-2 | 75,7 | S-SBR; ölverstreckt (siehe Text) | Lanxess Deutschland GmbH; 51369 Leverkusen; Deutschland |
| SMR 10 (ML 1 + 4 = 60 bis 70) | 15,0 | abgebauter Naturkautschuk | Wurfbain Nordmann GmbH; 20459 Hamburg; Deutschland |
| Buna CB 24 | 30,0 | cis-1,4-BR (siehe Text) | Lanxess Deutschland GmbH; 51369 Leverkusen; Deutschland |
| Kieselsäure (KS) | 80,0 | | |
| Si 266 | 5,8 | Bis(3-triethoxysilylpropyl)disulfid | Evonik Degussa GmbH; Frankfurt am Main; Deutschland |
| ZnO; RS RAL 844 C | 2,5 | Zinkoxid | Arnsperger Chemikalien GmbH; 50858 Köln; Deutschland |
| EDENOR ST1 GS | 2,0 | Palmitinstearinsäure; Stearin "Jodzahl 1" | Caldic Deutschland GmbH & Co. KG; 40231 Düsseldorf; Deutschland |
| Vivatec 500 | 12,3 | TDAE Weichmacheröl | Hansen und Rosenthal, 20457 Hamburg. Deutschland |
| Vulkanox 4020 LG | 1,5 | N-(1,3-dimethylbutyl)-N'-phenyl-p-phenylendiamin (6PPD) | Rhein Chemie Rheinau GmbH; 68219 Mannheim Rheinau; Deutschland |
| Protektor G 3108 | 1,0 | Mischung von raffinierten Kohlenwasserstottwachsen | Paramelt BV; 706875 Paramelt BV; NL 1704 RJ Heerhugowaard; Niederlande |
| **2. Stufe** | **Zwicken / remill Stufe** | | |
| Batch Stufe 1 | | | |
| **3. Stufe** | **Fertigmischen** | | |
| Batch Stufe 2 | | | |
| Vulkacit D | 2,0 | N,N'-Diphenylguanidin (DPG) | Rhein Chemie Rheinau GmbH; 68219 Mannheim Rheinau; Deutschland |
| Vulkacit CZ/EG-C | 1,5 | N-Cyclohexyl-2-benzothiazolsulfenamid (CBS) | Rhein Chemie Rheinau GmbH; 68219 Mannheim Rheinau; Deutschland |
| Perkacit TBZTD | 0,2 | Tetrabenzylthiuramdisulfid (TBzTD) | Flexsys N.V./S.A., Woluwe Garden; B-1932 St. Stevens Woluwe; Belgien |
| Mahlschwefel | 1,5 | Schwefel fein verteilt Ph Eur, BP | Merck KGaA; 64271 Darmstadt; Deutschland |

Bei dem Polymer VSL 5025-2 handelt es sich um ein in Lösung polymerisiertes SBR-Copolymer der Lanxess Deutschland GmbH mit einem Styrolgehalt von 25 Gew.-% und einem Butadiengehalt von 75 Gew.-%. Das Copolymer enthält 37,5 phr TDAE (Öl) und weist eine Mooney Viskosität (ML 1+4/100 °C) von etwa 47 auf. Bei dem Polymer Buna CB 24 handelt es sich um ein cis 1,4 Polybutadien (Titantyp) der Lanxess Deutschland GmbH mit einer Mooney Viskosität (ML 1+4/100 °C) zwischen 44 und 50. TESPD (Bis(triethoxysilylpropyl)disulfid) wird unter dem Handelsnamen Si 266 von der Evonik Degussa GmbH vertrieben. Als Weichmacher wurde Vivatec 500 (TDAE; Öl) verwendet. Bei Vulkanox 4020 handelt es sich um 6PPD der Rhein Chemie und Protektor G 3108 ist ein Ozonschutzwachs der Paramelt B.V.. Vulkacit D (DPG) und Vulkacit CZ (CBS) sind Handelsprodukte Rhein Chemie. Perkacit TBzTD ist ein Handelsprodukt der Flexsys B.V..

Die Gummimischung wird dreistufig in einem Innenmischer entsprechend der folgenden tabellarischen Aufstellung (Tabelle 4) hergestellt:

**Tabelle 4:**

| | |
|---|---|
| **1. Stufe** | Innenmischer GK 1.5N, Füllgrad 0,74<br>70 U/min, Durchflußtemperatur 70 °C<br>Friktion 1:1,11<br>Stempeldruck 5,5 bar |
| 0,0' - 0,5'<br>0,5' - 1,5'<br>1,5'<br>1,5' - 3,5'<br>3,5'<br>3,5' - 5,0'<br><br>5,0' | Polymere<br>1/2 KS, Silan, ZnO, Stearinsäure, Öl<br>säubern<br>1/2 KS, Vulkanox 4020, Protektor<br>säubern<br>mischen; ggf. Drehzahlvariation erforderlich, um die Auswurftemperatur zu erreichen<br>Batch ausfahren (Batchtemperatur 145 °C - 155 °C) und auf die Walze geben: Fell ausziehen |
| 24 h Zwischenlagerung bei Raumtemperatur zur Stufe 2 | |
| | |
| **2. Stufe** | Innenmischer GK 1.5N, Füllgrad 0,71<br>80 U/min, Durchflußtemperatur 80 °C<br>Friktion 1 : 1,11<br>Stempeldruck 5,5 bar |
| 0,0' - 2,0'<br>2,0' - 5,0'<br>5,0' | Batch Stufe 1 plastizieren<br>Batchtemperatur 150 °C halten durch Drehzahlvariation<br>Batch ausfahren (Batchtemperatur 145 °C - 155 °C) und auf die Walze geben: Fell ausziehen |
| 4 h Zwischenlagerung bei Raumtemperatur zur Stufe 3 | |
| | |
| **3. Stufe** | Innenmischer GK 1.5N, Füllgrad 0,68<br>40 U/min, Durchflußtemperatur 50 °C<br>Friktion 1 : 1,11<br>Stempeldruck 5,5 bar |
| 0,0' - 0,5'<br>0,5' - 2,0'<br>2,0' | Batch Stufe 2<br>Bestandteile der 3. Stufe<br>Batch ausfahren (Batchtemperatur 90 °C - 110 °C) und auf eine Laborwalze geben:<br>3 links, 3 rechts einschneiden, umlegen<br>2 * stürzen bei Walzenspalt von 3 mm<br>Fell in der für die Prüfkörperherstellung notwendigen Dicke ausziehen |
| 12 h Zwischenlagerung bei Raumtemperatur bis zur Vulkanisation der Prüfkörper | |

Das allgemeine Verfahren zur Herstellung von Kautschukmischungen und deren Vulkanisate ist in dem folgendem Buch beschrieben: "Rubber Technology Handbook", W. Hofmann, Hanser Verlag 1994.

Die Vulkanisationszeit für die Prüfkörper beträgt bei 160 °C jeweils 18 min. Die gummitechnische Prüfung erfolgt gemäß den in Tabelle 5 angegebenen Prüfmethoden.

**Tabelle 5:**

| Physikalische Testungen | |
|---|---|
| **Physikalische Testung** | **Norm / Bedingungen** |
| **Vulkameterprüfung, 160 °C, 0,5 °** | **DIN 53529/3, ISO 6502** |

(fortgesetzt)

| Physikalische Testungen | |
|---|---|
| **Physikalische Testung** | **Norm / Bedingungen** |
| **Rheometer MDR**<br>$M_L$ (dNm)<br>$M_H$ (dNm)<br>Delta Torque (dNm)<br>t 80 % - t 20 % (min) | |
| **Zugversuch am Stab S 1, 23 °C (Medianwerte aus 3 Stäben)**<br>Tensile Strength (MPa)<br>Modulus 300 % (MPa)<br>Elongation at break (%) | **DIN 53504, ISO 37** |
| **Shore-A-Härte, 23 °C (SH)** | **DIN 53 505** |
| **Ball Rebound 23 °C (%)** | **DIN EN ISO 8307,**<br>Fallhöhe 500 mm,<br>Stahlkugel, d = 19 mm, 28 g |
| **DIN-Abrasion, 23 °C, 10 N Kraft ($mm^3$)** | **DIN 53 516** |
| **Viskoelastische Eigenschaften,**<br>**50 N Vorkraft und 25 N Amplitudenkraft, Temperierzeit 5 min, Meßwertaufnahme nach 30 s Prüfzeit**<br>Komplexer Modul E* (MPa) | **DIN 53 513, ISO 2856** |

In den nachfolgend aufgeführten Tabelle 6 sind die anwendungstechnischen Daten der Beispiele 1, 2a und 3, die gemäß den Tabellen 3 - 5 compoundiert und getestet wurden, dargestellt. Als Referenzen wurden die beiden gefällten Kieselsäuren Ultrasil 7000 GR (Evonik Degussa GmbH; Referenz 1) und Zeosil 1165 MP (Rhodia Deutschland GmbH; Referenz 2) eingesetzt.

**Tabelle 6:**

| Anwendungstechnische Daten | | | | | | |
|---|---|---|---|---|---|---|
| | | **Referenz 1** | **Referenz 2** | **Beispiel 1** | **Beispiel 2a** | **Beispiel 3** |
| *MDR: 160°C; 0.5°* | | | | | | 2,4 |
| $M_L$ | dNm | 2,6 | 2,3 | 2,8 | 2,8 | 2,4 |
| $M_H$ | dNm | 18,4 | 18,8 | 20,8 | 20,5 | 19,2 |
| Delta torque | dNm | 15,8 | 16,5 | 18,0 | 17,7 | 16,8 |
| t 80 % - t 20 % min 2,9 | min | 2.9 | 2.3 | 3.0 | 3,0 | 2.5 |
| *vulcanization time (160 °C)* | min | 18 | 18 | 18 | 18 | 18 |
| *Tensile strength* (*dumb-bell 1)* | MPa | 15,2 | 16,3 | 15,3 | 17,5 | 18,5 |
| Modulus 300 % | MPa | 7,4 | 7,9 | 7,4 | 7,4 | 7,7 |
| Elongation at break | % | 494 | 482 | 481 | 513 | 546 |
| *Shore-A-hardness* | SH | 61 | 64 | 66 | 64 | 64 |
| *DIN-Abrasion, 10 N* | $mm^3$ | 93 | 94 | 80 | 91 | 66 |
| *Ball-Rebound, 23 °C* | % | 39,6 | 38,3 | 37,5 | 36,6 | 36,8 |
| E*, 60 °C | MPa | 7,4 | 8,2 | 9,6 | 9,1 | 8,6 |

Gegenüber den Referenzen bieten die Beispiele ein überlegendes gummitechnisches Wertebild, was sich besonders in der Gesamtperformance widerspiegelt. So zeigt sich eine sehr gute Verstärkung bei zu den Referenzen

vergleichbaren Härten. Die Überlegenheit der erfindungsgemäßen Kieselsäuren gegenüber dem Stand der Technik zeigt sich aber vor allem in einem verbessertem Abriebsniveau, DIN-Abrieb, und in einem verbesserten dynamischen Verhalten. Dieses wird angezeigt durch einen niedrigeren Ball-Rebound bei 23 C, welcher ein verbessertes Nassrutschverhalten einer mit den erfindungsgemäßen Kieselsäuren gefüllten Reifenlauffläche anzeigt. Der hohe dynamische komplexe Modul E* bei 60 °C führt außerdem zu einer höheren Fahrstabilität. Somit kann gezeigt werden, dass die Kieselsäuren gemäß den Beispielen 1 bis 3 eine Gesamtperformance bieten, die nach dem Stand der Technik bisher nicht erreichbar war.

## Patentansprüche

**1.** Fällungskieselsäure, die folgende physikalischchemische Eigenschaften aufweist:

| | |
|---|---|
| CTAB-Oberfläche | $\geq$ 150 $m^2/g$ |
| BET-Oberfläche: | $\geq$ 150 $m^2/g$ |
| DBP-Zahl | 180 - 350 g / (100 g) |
| half width / peak | $\leq$ 0,95 |
| d 25 % / d 75 % | 1,00 bis 1,80 |

relative Breite $\gamma$, 5s gepresst mit 1t, $\leq$ 2,8 (g nm)/ml
Feinheitsindex F.V, 5s gepresst mit 1t, :100 bis 140 Å.

**2.** Fällungskieselsäure nach Anspruch 1, **dadurch gekennzeichnet, dass** sie einen Morphologie-Index IM von 0,20 bis 0,85 aufweist.

**3.** Fällungskieselsäure nach Anspruch 1 oder 2, **dadurch gekennzeichnet, dass** sie ein Porenvolumenverhältnis V2 / V1, 5s gepresst mit 1t, von 0,2 bis 0,75 aufweist.

**4.** Fällungskieselsäure nach einem der Ansprüche 1 bis 3,
**dadurch gekennzeichnet, dass** sie einen $Al_2O_3$-Gehalt von 0,1 bis 5,0 Gew. % aufweist.

**5.** Fällungskieselsäure nach einem der Ansprüche 1 bis 3,
**dadurch gekennzeichnet,**
**dass** sie einen Feinheitsidex im gepressten zustand F.V., 5s gepresst mit 1t, von 100 bis 130 Å aufweist.

**6.** Fällungskieselsäure nach einem der Ansprüche 1 bis 5,
**dadurch gekennzeichnet,**
**dass** sie eine relative Breite $\gamma$, 5s gepresst mit 1t, der Porengrößenverteilung von 1,5 bis 2,5 (g nm)/ml aufweist.

**7.** Fällungskieselsäure nach einem der Ansprüche 1 bis 6,
**dadurch gekennzeichnet,**
**dass** sie eine auf die Lage des Peaks normierte Halbwertsbreite des Peaks half width / peak von 0,65 bis 0,9 aufweist.

**8.** Fällungskieselsäure nach einem der Ansprüche 1 bis 7,
**dadurch gekennzeichnet,**
**dass** sie ein Verhältnis d 25 % / d 75 % von 1,20 bis 1,80 aufweist.

**9.** Fällungskieselsäure nach einem der Ansprüche 1 bis 8,
**dadurch gekennzeichnet,**
**dass** sie ein Verhältnis d 25% / d 75 % von 1,4 bis 1,75 aufweist.

**10.** Fällungskieselsäure nach einem der Ansprüche 1 bis 9,
**dadurch gekennzeichnet,**
**dass** sie eine BET-Oberfläche von 160 bis 210 $m^2/g$ und /oder eine CTAB-Oberfläche von 160 bis 190 $m^2/g$ und / oder einen Morphologie-Index IM von 0,50 bis 0,80 und / oder ein Porenvolumenverhältnis V2 / V1, 5s gepresst mit 1t, von 0,3 bis 0,6 und / oder einen A1203-Gehalt von 0,1 bis 2 Gew. % und/oder eine modifizierte Searszahl Vol 2 von 23 bis 27 ml / (5g) aufweist.

**11.** Fällungskieselsäure nach einem der Ansprüche 1 bis 10,
**dadurch gekennzeichnet,**
**dass** es sich um ein Granulat mit einer Partikelgrößenverteilung welche derart ausgestaltet ist, dass mittels der Siebrückstandsbestimmung (Ro-Tap) mindestens 80 Gew.-% der Partikel größer als 300 μm und maximal 10 Gew.-% kleiner als 75 μm sind oder um ein Pulver mit einer, mittels Laserbeugung bestimmten, mittleren Partikelgröße d50 von 15 bis 80 μm oder um sphärische Partikel mit einer, mittels der Siebrückstandsbestimmung (Alpine) bestimmten, Partikelgröße d50 von 80 μm bis 1000 μm handelt.

**12.** Verfahren zur Herstellung von Fällungskieselsäuren gemäß Anspruch 1, umfassend die Schritte

a) Vorlegen einer wässrige Lösung eines Alkali- oder Erdalkalisilikats und/oder einer organischen und/oder anorganischen Base
b) gleichzeitiges Zudosieren von zumindest einem Alkali- und oder Erdalkalisilikat und zumindest einem Säuerungsmittel in diese Vorlage unter Rühren bei 75 bis 88 °C für 60 bis 120, bevorzugt 70 bis 90 Minuten
c) Fortsetzen der Zugabe des in Schritt b) verwendeten Säuerungsmittels und / oder eines anderen Säuerungsmittels, mit gleicher oder veränderter Dosierrate wie in Schritt b), solange, bis ein pH-Wert der Fällsuspension von 7 bis 10 erreicht ist und Nachrühren der erhaltenen Suspension bei diesem pH-Wert für 40 bis 80 Minuten, bei hohen Temperaturen von 80 bis 98 °C
d) Rücksäuern mit zumindest einem Säuerungsmittel auf einen pH-Wert von etwa 5 bis etwa 8
e) Rücksäuern mit zumindest einem Säuerungsmittel auf einen pH-Wert von 4 bis 5 wobei die Dosierrate des Säuerungsmittels kleiner ist als in Schritt d).
f) Filtrieren der Fällsuspension
g) Waschen des Filterkuchens
h) Optional Verflüssigen des Filterkuchens
i) Trocknen
j) optional Vermahlen und/oder Granulieren

**13.** Verfahren nach Anspruch 12,
**dadurch gekennzeichnet,**
**dass** zwischen den Schritten g) und i) ein Schritt

h) Verflüssigen des Filterkuchens

durchgeführt wird.

**14.** Verfahren nach Anspruch 13,
**dadurch gekennzeichnet,**
**dass** während der Verflüssigung Aluminium, bevorzugt in Form eines Aluminats, besonders bevorzugt in Form von Natriumaluminat zugegeben wird.

**15.** Verfahren nach Anspruch einem der Ansprüche 12 bis 14,
**dadurch gekennzeichnet,**
**dass** nach Schritt i) ein Schritt

j) Vermahlen und/oder Granulieren

durchgeführt wird.

**16.** Verfahren nach Anspruch 15,
**dadurch gekennzeichnet,**
**dass** die Granulation mit einem Walzenkompaktor durchgeführt wird.

**17.** Verfahren nach einem der Ansprüche 12 bis 16,
**dadurch gekennzeichnet,**
**dass** als Base ein Alkali- und/oder Erdalkalisilikat und/oder ein Alkali- und/oder ein Erdalkalihydroxid verwendet wird.

**18.** Verfahren nach einem der Ansprüche 12 bis 17,
**dadurch gekennzeichnet,**

**dass** während einem der Schritte a) bis j) eine Zugabe eines organischen oder anorganischen Salzes erfolgt.

**19.** Verfahren nach einem der Ansprüche 12 bis 18,
**dadurch gekennzeichnet,**
**dass** zur Trocknung ein Spin-Flash-Trockner oder Düsenturm eingesetzt wird.

**20.** Fällungskieselsäuren nach einem der Ansprüche 1 bis 11 oder hergestellt nach einem der Ansprüche 12 bis 19,
**dadurch gekennzeichnet,**
**dass** ihre Oberflächen mit Organosilanen der Formel I bis III modifiziert sind:

$(SiR^1_n(RO)_r(Alk)_m(Ar)_p]_q[B]$ (I),

$SiR^1_n(RO)_{3-n}$ (Alkyl) (II),

oder

$SiR^1_n(RO)_{3-n}$, (Alkenyl) (III),

in denen bedeuten

B: -SCN, -SH, -Cl, $-NH_2$, $-OC(O)CHCH_2$, - $OC(O)C(CH_3)CH_2$ (wenn q = 1) oder $-S_w-$ (wenn q = 2), wobei B chemisch an Alk gebunden ist,
R und $R^1$: aliphatischer, olefinischer, aromatischer oder arylaromatischer Rest mit 2 - 30 C-Atomen, der optional mit den folgenden Gruppen substituiert sein kann: Hydroxy-, Amino-, Alkoholat-, Cyanid-, Thiocyanid-, Halogen-, Sulfon-säure-, Sulfonsäureester-, Thiol-, Benzoesäure-, Benzoesäureester-, Carbonsäure-, Carbonsäureester-, Acrylat-, Metacrylat-, Organosilanrest, wobei R und $R^1$ eine gleiche oder verschiedene Bedeutung oder Substituierung haben können.
n: 0, 1 oder 2,
Alk: einen zweiwertigen unverzweigten oder verzweigten Kohlenwasserstoffrest mit 1 bis 6 Kohlenstoffatomen,
m: 0 oder 1,
Ar: einen Arylrest mit 6 bis 12 C-Atomen, bevorzugt 6 C-Atomen, der mit den folgenden Gruppen substituiert sein kann: Hydroxy-, Amino-, Alkoholat-, Cyanid-, Thiocyanid-, Halogen-, Sulfonsäure-, Sulfonsäureester-, Thiol-, Benzoesäure-, Benzoesäureester-, Carbonsäure-, Carbonsäureester-, Acrylat-, Metacrylat-, Organosilanrest.
p: 0 oder 1, mit der Maßgabe, dass p und n nicht gleichzeitig 0 bedeuten,
q: 1 oder 2,
w: eine Zahl von 2 bis 8,
r: 1, 2 oder 3, mit der Maßgabe, dass r + n + m + p = 4,
Alkyl: einen einwertigen unverzweigten oder verzweigten gesättigten
Kohlenwasserstoffrest mit 1 bis 20 Kohlenstoffatomen, bevorzugt 2 bis 8 Kohlenstoffatomen,
Alkenyl: einen einwertigen unverzweigten oder verzweigten ungesättigten Kohlenwasserstoffrest mit 2 bis 20 Kohlenstoffatomen, bevorzugt 2 bis 8 Kohlenstoffatomen.

**21.** Fällungskieselsäuren nach einem der Ansprüche 1 bis 11 oder hergestellt nach einem der Ansprüche 12 bis 19,
**dadurch gekennzeichnet,**
**dass** ihre Oberflächen mit Siliciumorganischen Verbindungen der Zusammensetzung $SiR^2_{4-n}X_n$ (mit n = 1, 2, 3, 4),
$[SiR^2_xX_yO]_z$ (mit $0 \leq x \leq 2$; $0 \leq y \leq 2$; $3 \leq z \leq 10$, mit x + y = 2),
$[SiR^2_xX_yN]_z$ (mit $0 \leq x \leq 2$; $0 \leq y \leq 2$; $3 \leq z \leq 10$, mit x + y = 2),
$SiR^2_nX_mOSiR^2_oX_p$ (mit $0 \leq n \leq 3$; $0 \leq m \leq 3$; $0 \leq o \leq 3$; $0 \leq p \leq 3$, mit n + m = 3, o + p = 3),
$SiR^2_nX_mNSiR^2_oX_p$ (mit $0 \leq n \leq 3$; $0 \leq m \leq 3$; $0 \leq o \leq 3$; $0 \leq p \leq 3$, mit n + m = 3, o + p = 3),
und / oder
$SiR^2_nX_m[SiR^2_xX_yO]_zSiR^2_oX_p$ (mit $0 \leq n \leq 3$; $0 \leq m \leq 3$; $0 \leq x \leq 2$; $0 \leq y \leq 2$; $0 \leq o \leq 3$; $0 \leq p \leq 3$; $1 \leq z \leq 10000$, mit n + m = 3, x + y = 2, o + p = 3)
wobei bedeuten

$R^2$: substituierte und / oder unsubstituierte Alkyl- und / oder Arylreste mit 1 - 20 Kohlenstoffatomen und / oder Alkoxy- und / oder Alkenyl- und / oder Alkinyl--Gruppen und / oder schwefelhaltige Gruppen
X: Silanol-, Amino-, Thiol-, Halogen-, Alkoxy-, Alkenyl- und / oder Wasserstoff-Rest, modifiziert sind.

**22.** Verfahren zur Herstellung der Kieselsäuren gemäß einem der Ansprüche 20 oder 21,
**dadurch gekennzeichnet,**
**dass** man die Fällungskieselsäuren mit Organosiliziumverbindungen in Mischungen von 0.5 bis 50 Teilen, bezogen auf 100 Teile Fällungskieselsäure, insbesondere 1 bis 15 Teile, bezogen auf 100 Teile Fällungskieselsäure, modifiziert, wobei die Reaktion zwischen Fällungskieselsäure und Organosiliziumverbindung während der Mischungsherstellung (in situ) oder außerhalb durch Aufsprühen und anschließendes Tempern der Mischung, durch Mischen der Organosiliziumverbindung und der Kieselsäuresuspension mit anschließender Trocknung und Temperung durchgeführt wird.

**23.** Verwendung der Kieselsäuren gemäß der Ansprüche 1 - 11 in Elastomerenmischungen, vulkanisierbaren Kautschukmischungen und/oder sonstigen Vulkanisaten.

**24.** Elastomerenmischungen, vulkanisierbare Kautschukmischungen oder sonstige Vulanisate sowie Reifen, enthaltend die Kieselsäuren gemäß den Ansprüchen 1 - 11.

**Claims**

**1.** Precipitated silica having the following physicochemical properties:

| | |
|---|---|
| CTAB surface area | ≥ 150 $m^2/g$ |
| BET surface area: | ≥ 150 $m^2/g$ |
| DBP number | 180 - 350 g/(100 g) |
| half width/peak | ≤ 0.95 |
| d 25%/d 75% relative width $\gamma$, 5 s | 1.00 to 1.80 |
| pressed with 1 t, fineness value F.V., 5 s | ≤ 2.8 (gnm)/ml |
| pressed with 1 t,: | 100 to 140 Å. |

**2.** Precipitated silica according to Claim 1, **characterized in that** it has a morphology index IM of 0.20 to 0.85.

**3.** Precipitated silica according to Claim 1 or 2, **characterized in that** it has a pore volume ratio V2/V1, 5 s pressed with 1 t, of 0.2 to 0.75.

**4.** Precipitated silica according to any one of Claims 1 to 3, **characterized in that** it has an $Al_2O_3$ content of 0.1 to 5.0% by weight.

**5.** Precipitated silica according to any one of Claims 1 to 3, **characterized in that** it has a fineness value in the pressed state F.V., 5 s pressed with 1 t, of 100 to 130 Å.

**6.** Precipitated silica according to any one of Claims 1 to 5, **characterized in that** it has a relative width $\gamma$, 5 s pressed with 1 t, of the pore size distribution of 1.5 to 2.5 (gnm)/ml.

**7.** Precipitated silica according to any one of Claims 1 to 6, **characterized in that** it has a half-height width of the peak normalized to the position of the peak, half width/peak, of 0.65 to 0.9.

**8.** Precipitated silica according to any one of Claims 1 to 7, **characterized in that** it has a d 25%/d 75% ratio of 1.20 to 1.80.

**9.** Precipitated silica according to any one of Claims 1 to 8, **characterized in that** it has a d 25%/d 75% ratio of 1.4 to 1.75.

**10.** Precipitated silica according to any one of Claims 1 to 9, **characterized in that** it has a BET surface area of 160 to 210 $m^2/g$ and/or a CTAB surface area of 160 to 190 $m^2/g$ and/or a morphology index IM of 0.50 to 0.80 and/or a pore volume ratio V2/V1, 5 s pressed with 1 t, of 0.3 to 0.6 and/or an $Al_2O_3$ content of 0.1 to 2% by weight and/or a modified Sears number, Vol 2, of 23 to 27 ml/(5 g).

**11.** Precipitated silica according to any one of Claims 1 to 10, **characterized in that** it is a granule with a particle size distribution configured such that, by means of the sieve residue determination (Ro-Tap) at least 80% by weight of the particles are larger than 300 μm and not more than 10% by weight are smaller than 75 μm, or it is a powder with a mean particle size d50, determined by means of laser diffraction, of 15 to 80 μm, or it is spherical particles with a particle size d50 determined by means of sieve residue determination (Alpine) of 80 μm to 1000 μm.

**12.** Process for preparing precipitated silicas according to Claim 1, comprising the steps of

a) initially charging an aqueous solution of an alkali metal or alkaline earth metal silicate and/or an organic and/or inorganic base
b) simultaneously metering at least one alkali metal and/or alkaline earth metal silicate and at least one acidifier into this initial charge with stirring at 75 to 88°C for 60 to 120, preferably 70 to 90, minutes,
c) continuing the addition of the acidifier used in step b) and/or of another acidifier, with the same or a different metering rate from that in step b), until a pH of the precipitate suspension of 7 to 10 has been attained and continuing to stir the resulting suspension at this pH for 40 to 80 minutes, at high temperatures of 80 to 98°C,
d) reacidifying with at least one acidifier to a pH of about 5 to about 8
e) reacidifying with at least one acidifier to a pH of 4 to 5, the metering rate of the acidifier being less than in step d).
f) filtering the precipitate suspension
g) washing the filtercake
h) optionally liquefying the filtercake
i) drying
j) optionally grinding and/or granulating.

**13.** Process according to Claim 12, **characterized in that**, between steps g) and i), a step

h) liquefying the filtercake

is carried out.

**14.** Process according to Claim 13, **characterized in that**, during the liquefaction, aluminium, preferably in the form of an aluminate, more preferably in the form of sodium aluminate, is added.

**15.** Process according to any one of Claims 12 to 14, **characterized in that**, after step i), a step

j) grinding and/or granulating

is carried out.

**16.** Process according to Claim 15, **characterized in that** the granulation is carried out with a roll compactor.

**17.** Process according to any one of Claims 12 to 16, **characterized in that** the base used is an alkali metal and/or alkaline earth metal silicate and/or an alkali metal and/or an alkaline earth metal hydroxide.

**18.** Process according to any one of Claims 12 to 17, **characterized in that**, during one of steps a) to j), an organic or inorganic salt is added.

**19.** Process according to any one of Claims 12 to 18, **characterized in that** a spin flash drier or nozzle tower is used for drying.

**20.** Precipitated silicas according to any one of Claims 1 to 11 or prepared according to any one of Claims 12 to 19, **characterized in that** their surfaces have been modified with organosilanes of the formulae I to III:

$$[SiR^1_n(RO)_r(Alk)_m(Ar)_p]_q[B] \qquad (I),$$

$$SiR^1_n(RO)_{3-n}\ (alkyl) \qquad (II),$$

or

$SiR^1_n(RO)_{3-n}(alkenyl)$ (III),

in which

B: -SCN, -SH, -Cl, $-NH_2$, $-OC(O)CHCH_2$, $-OC(O)C(CH_3)CH_2$ (when q = 1) or $-S_w$-(when q = 2), where B is chemically bonded to Alk,
R and $R^1$: aliphatic, olefinic, aromatic or arylaromatic radical having 2 - 30 carbon atoms, which may optionally be substituted by the following groups: hydroxyl, amino, alkoxide, cyanide, thiocyanide, halogen, sulphonic acid, sulphonic ester, thiol, benzoic acid, benzoic ester, carboxylic acid, carboxylic ester, acrylate, methacrylate, organosilane radical, where R and $R^1$ may have an identical or different definition or substitution,
n: 0, 1 or 2,
Alk: a divalent unbranched or branched hydrocarbon radical having 1 to 6 carbon atoms,
m: 0 or 1,
Ar: an aryl radical having 6 to 12 carbon atoms, preferably 6 carbon atoms, which may be substituted by the following groups: hydroxyl, amino, alkoxide, cyanide, thiocyanide, halogen, sulphonic acid, sulphonic ester, thiol, benzoic acid, benzoic ester, carboxylic acid, carboxylic ester, acrylate, methacrylate, organosilane radical,
p: 0 or 1, with the proviso that p and n are not both 0,
q: 1 or 2,
w: a number from 2 to 8,
r: 1, 2 or 3, with the proviso that r + n + m + p = 4,
alkyl: a monovalent unbranched or branched saturated hydrocarbon radical having 1 to 20 carbon atoms, preferably 2 to 8 carbon atoms,
alkenyl: a monovalent unbranched or branched unsaturated hydrocarbon radical having 2 to 20 carbon atoms, preferably 2 to 8 carbon atoms.

**21.** Precipitated silicas according to any one of Claims 1 to 11 or prepared according to any one of Claims 12 to 19, **characterized in that** their surfaces have been modified with organosilicon compounds of the composition $SiR^2_{4-n}X_n$ (where n = 1, 2, 3, 4),
$[SiR^2_xX_yO]_z$ (where $0 \le x \le 2$; $0 \le y \le 2$; $3 \le z \le 10$, where x + y = 2),
$[SiR^2_xX_yN]_z$ (where $0 \le x \le 2$; $0 \le y \le 2$; $3 \le z \le 10$, where x + y = 2),
$SiR^2_nX_mOSiR^2_oX_p$ (where $0 \le n \le 3$; $0 \le m \le 3$;
$0 \le o \le 3$; $0 \le p \le 3$, where n + m = 3, o + p = 3), $SiR^2_nX_{mN}SiR^2_oX_p$ (where $0 \le n \le 3$; $0 \le m \le 3$; $0 \le o \le 3$; $0 \le p \le 3$, where n + m = 3, o + p = 3), and/or
$SiR^2_nX_m[SiR^2_xX_yO]_zSiR^2_oX_p$ (where $0 \le n \le 3$; $0 \le m \le 3$;
$0 \le x \le 2$; $0 \le y \le 2$; $0 \le o \le 3$; $0 \le p \le 3$; $1 \le z \le 10\,000$, where n + m = 3, x + y = 2, o + p = 3),
where

$R^2$: substituted and/or unsubstituted alkyl and/or aryl radicals having 1 - 20 carbon atoms and/or alkoxy and/or alkenyl and/or alkynyl groups and/or sulphur-containing groups
X: silanol, amino, thiol, halogen, alkoxy, alkenyl and/or hydrogen radical.

**22.** Process for preparing the silicas according to either of Claims 20 and 21,
**characterized in that**
the precipitated silicas are modified with organosilicon compounds in mixtures of 0.5 to 50 parts, based on 100 parts of precipitated silica, especially 1 to 15 parts, based on 100 parts of precipitated silica, the reaction between precipitated silica and organosilicon compounds being carried out during the preparation of the mixture (in situ) or outside by spraying and then heating the mixture, by mixing the organosilicon compound and the silica suspension with subsequent drying and heat treatment.

**23.** Use of the silicas according to Claims 1-11 in elastomer mixtures, vulcanizable rubber mixtures and/or other vulcanizates.

**24.** Elastomer mixtures, vulcanizable rubber mixtures or other vulcanizates, and also tyres, comprising the silicas according to Claims 1-11.

## Revendications

1. Silice précipitée, qui présente les propriétés physico-chimiques suivantes :

| | |
|---|---|
| surface CTAB | ≥ 150 $m^2/g$ |
| surface BET | ≥ 150 $m^2/g$ |
| indice DBP | 180 - 350 g / (100 g) |
| half width / peak | ≤ 0,95 |
| d 25 % / d 75 % | 1,00 à 1,80 |

largeur relative γ, pressée 5 s avec 1 t, ≤ 2,8 (g nm)/ml
indice de finesse F.V, pressée 5 s avec 1 t, : 100 à 140 Å.

2. Silice précipitée selon la revendication 1, **caractérisée en ce qu'**elle présente un indice de morphologie IM de 0,20 à 0,85.

3. Silice précipitée selon la revendication 1 ou 2, **caractérisée en ce qu'**elle présente un rapport de volumes de pores V2 / V1, pressée 5 s avec 1 t, de 0,2 à 0,75.

4. Silice précipitée selon l'une quelconque des revendications 1 à 3, **caractérisé en ce qu'**elle présente une teneur en $Al_2O_3$ de 0,1 à 5,0 % en poids.

5. Silice précipitée selon l'une quelconque des revendications 1 à 3, **caractérisée en ce qu'**elle présente un indice de finesse à l'état pressé F.V., pressée 5 s avec 1 t, de 100 à 130 Å.

6. Silice précipitée selon l'une quelconque des revendications 1 à 5, **caractérisée en ce qu'**elle présente une largeur relative γ, pressée 5 s avec 1 t, de la distribution des tailles de pores de 1,5 à 2,5 (g nm)/ml.

7. Silice précipitée selon l'une quelconque des revendications 1 à 6, **caractérisée en ce qu'**elle présente une demi-largeur du pic, normalisée quant à la position du pic, half width / peak de 0,65 à 0,9.

8. Silice précipitée selon l'une quelconque des revendications 1 à 7, **caractérisée en ce qu'**elle présente un rapport d 25 % / d 75 % de 1,20 à 1,80.

9. Silice précipitée selon l'une quelconque des revendications 1 à 8, **caractérisée en ce qu'**elle présente un rapport d 25 % / d 75 % de 1,4 à 1,75.

10. Silice précipitée selon l'une quelconque des revendications 1 à 9, **caractérisée en ce qu'**elle présente une surface BET de 160 à 210 $m^2/g$ et/ou une surface CTAB de 160 à 190 $m^2/g$ et/ou un indice de morphologie IM de 0,50 à 0,80 et/ou un rapport des volumes de pores V2 / V1, pressée 5 s avec 1 t, de 0,3 à 0,6 ou une teneur en $Al_2O_3$ de 0,1 à 2 % en poids et/ou un indice de Sears modifié Vol 2 de 23 à 27 ml / (5 g).

11. Silice précipitée selon l'une quelconque des revendications 1 à 10, **caractérisée en ce qu'**il s'agit d'un granulé ayant une distribution de tailles de particules qui est conçue telle qu'au moyen de la détermination des résidus de tamis (Ro-Tap) au moins 80 % en poids des particules ont une taille supérieure à 300 μm et au maximum 10 % en poids ont une taille inférieure à 75 μm ou d'une poudre ayant une taille moyenne de particule d50, déterminée par diffraction laser, de 15 à 80 μm ou de particules sphériques ayant une taille de particule d50, déterminée au moyen de la détermination des résidus de tamis (Alpine) de 80 μm à 1 000 μm.

12. Procédé pour la production de silices précipitées selon la revendication 1, comprenant les étapes

a) disposition au préalable d'une solution aqueuse d'un silicate de métal alcalin ou alcalino-terreux et/ou d'une base organique et/ou inorganique
b) introduction dans cette charge disposée au préalable, par addition dosée simultanée pendant 60 à 120, de préférence 70 à 90 minutes, sous agitation, à 75 - 88 °C, d'au moins un silicate de métal alcalin et/ou alcalino-terreux et d'au moins un acidifiant
c) poursuite de l'addition de l'acidifiant utilisé dans l'étape b) et/ou d'un autre acidifiant, à la même vitesse d'addition que dans l'étape b) ou à une vitesse modifiée, jusqu'à ce que soit atteint un pH de la suspension de précipitation de 7 à 10 et post-agitation de la suspension obtenue à ce pH pendant 40 à 80 minutes, à de hautes températures de 80 à 98 °C
d) ré-acidification à l'aide d'au moins un acidifiant, jusqu'à un pH d'environ 5 à environ 8
e) ré-acidification à l'aide d'au moins un acidifiant jusqu'à un pH de 4 à 5, la vitesse d'addition dosée de l'acidifiant étant inférieure à celle dans l'étape d)
f) filtration de la suspension de précipitation
g) lavage du gâteau de filtration
h) en option fluidification du gâteau de filtration
i) séchage
j) en option broyage et/ou granulation.

**13.** Procédé selon la revendication 12,
**caractérisé en ce**
**qu'**entre les étapes g) et i) on effectue une étape h) fluidification du gâteau de filtration.

**14.** Procédé selon la revendication 13
**caractérisé en ce que**
pendant la fluidification on ajoute de l'aluminium, de préférence sous forme d'un aluminate, de façon particulièrement préférée sous forme d'aluminate de sodium.

**15.** Procédé selon l'une quelconque des revendications 12 à 14,
**caractérisé en ce**
**qu'**après l'étape i) on effectue une étape j) broyage et/ou granulation.

**16.** Procédé selon la revendication 15,
**caractérisé en ce**
**qu'**on effectue la granulation dans un compacteur à cylindres.

**17.** Procédé selon l'une quelconque des revendications 12 à 16,
**caractérisé en ce**
**qu'**on utilise comme base un silicate de métal alcalin et/ou alcalino-terreux et/ou un hydroxyde de métal alcalin et/ou alcalino-terreux.

**18.** Procédé selon l'une quelconque des revendications 12 à 17,
**caractérisé en ce que**
pendant l'une des étapes a) à j) s'effectue une addition d'un sel organique ou inorganique.

**19.** Procédé selon l'une quelconque des revendications 12 à 18,
**caractérisé en ce que**
pour le séchage on utilise un sécheur spin-flash ou un sécheur par atomisation à buses.

**20.** Silices précipitées selon l'une quelconque des revendications 1 à 11 ou produites selon l'une quelconque des revendications 12 à 19,
**caractérisées en ce que**
leurs surfaces sont modifiées avec des organosilanes de formules I à III :

$$[SiR^1_n(RO)_r(Alk)_m(Ar)_p]_q[B] \quad (I),$$

$$SiR^1_n(RO)_{3-n}(alkyle) \quad (II),$$

ou

$SiR^1_n(RO)_{3-n}$(alcényle) (III),

dans lesquelles

B représente : -SCN, -SH, -Cl, $-NH_2$, $-OC(O)CHCH_2$, $-OC(O)C(CH_3)(CH_2)$ (lorsque q = 1) ou $-S_w-$(lorsque q = 2), B étant chimiquement lié à Alk,
R et $R^1$ représentent : un radical aliphatique, oléfinique, aromatique ou arylaromatique ayant 2 - 30 atomes de carbone, qui peut éventuellement être substitué par les groupes suivants : radical hydroxy, amino, alcoolate, cyanure, thiocyanure, halogéno, acide sulfonique, ester d'acide sulfonique, thiol, acide benzoïque, ester d'acide benzoïque, acide carboxylique, ester d'acide carboxylique, acrylate, méthacrylate organosilane, R et $R^1$ pouvant avoir la même signification ou substitution ou des significations ou substitutions différentes,
n vaut : 0, 1 ou 2,
Alk représente : un radical hydrocarboné divalent, ramifié ou non ramifié, ayant de 1 à 6 atomes de carbone,
m vaut : 0 ou 1,
Ar représente : un radical aryle ayant de 6 à 12 atomes de carbone, de préférence 6 atomes de carbone, qui peut être substitué par les groupes suivants : radical hydroxy, amino, alcoolate, cyanure, thiocyanure, halogéno, acide sulfonique, ester d'acide sulfonique, thiol, acide benzoïque, ester d'acide benzoïque, acide carboxylique, ester d'acide carboxylique, acrylate, méthacrylate, organosilane,
P vaut : 0 ou 1, étant entendu que p et n ne signifient pas simultanément 0,
q vaut : 1 ou 2,
w est : un nombre valant de 2 à 8,
r vaut : 1, 2 ou 3, étant entendu que r + n + m + p = 4,
alkyle représente : un radical hydrocarboné saturé monovalent ramifié ou non ramifié ayant de 1 à 20 atomes de carbone, de préférence de 2 à 8 atomes de carbone,
alcényle représente : un radical hydrocarboné insaturé monovalent ramifié ou non ramifié ayant de 2 à 20 atomes de carbone, de préférence de 2 à 8 atomes de carbone.

**21.** Silices précipitées selon l'une quelconque des revendications 1 à 11 ou produites selon l'une quelconque des revendications 12 à 19,
**caractérisées en ce que**
leurs surfaces sont modifiées avec des composés organosiliciés ayant la composition $SiR^2_{4-n}X_n$ (où n = 1, 2, 3, 4),
$[SiR^2_xX_yO]_z$ (où $0 \leq x \leq 2$ ; $0 \leq y \leq 2$ ; $3 \leq z \leq 10$, avec x + y = 2)
$[SiR^2_xX_yN]_z$ (où $0 \leq x \leq 2$ ; $0 \leq y \leq 2$ ; $3 \leq z \leq 10$, avec x + y = 2)
$SiR^2_nX_mOSiR^2_oX_p$ (où $0 \leq n \leq 3$ ; $0 \leq m \leq 3$ ; $0 \leq o \leq 3$ ; $0 \leq p \leq 3$, avec n + m = 3, o + p = 3),
$SiR^2_nX_mNSiR^2_oX_p$ (où $0 \leq n \leq 3$ ; $0 \leq m \leq 3$ ; $0 \leq o \leq 3$ ; $0 \leq p \leq 3$, avec n + m = 3, o + p = 3),
et/ou
$SiR^2_nX_m[SiR^2_xX_yO]_zSiR^2_oX_p$ (où $0 \leq n \leq 3$ ; $0 \leq m \leq 3$ ; $0 \leq x \leq 2$ ; $0 \leq y \leq 2$ ; $0 \leq o \leq 3$ ; $0 \leq p \leq 3$ ; $1 \leq z \leq 10000$ ; avec n + m = 3, x + y = 2, o + p = 3)

$R^2$ représentant : des radicaux alkyle et/ou aryle substitués et/ou non substitués ayant 1 - 20 atomes de carbone et/ou des groupes alcoxy et/ou alcényle et/ou alcynyle et/ou des groupes soufrés
X représentant : un radical silanol, amino, thiol, halogéno, alcoxy, alcényle et/ou un atome d'hydrogène.

**22.** Procédé pour la production des silices selon l'une quelconque des revendications 20 et 21, **caractérisé en ce qu'**on modifie les silices précipitées avec des composés organosiliciés dans des mélanges de 0,5 à 50 parties, par rapport à 100 parties de silice précipitée, en particulier de 1 à 15 parties, par rapport à 100 parties de silice précipitée, la réaction entre silice précipitée et composé organosilicié étant effectuée pendant la préparation du mélange (in situ) ou en dehors par pulvérisation et traitement thermique subséquent du mélange, par mélange du composé organosilicié et de la suspension de silice avec séchage et traitement thermique subséquents.

**23.** Utilisation des silices selon les revendications 1 à 11 dans des compositions d'élastomères, des compositions de caoutchoucs vulcanisables et/ou d'autres vulcanisats.

**24.** Compositions d'élastomères, compositions de caoutchoucs vulcanisables ou autres vulcanisats ainsi que pneumatiques, contenant les silices selon les revendications 1 à 11.

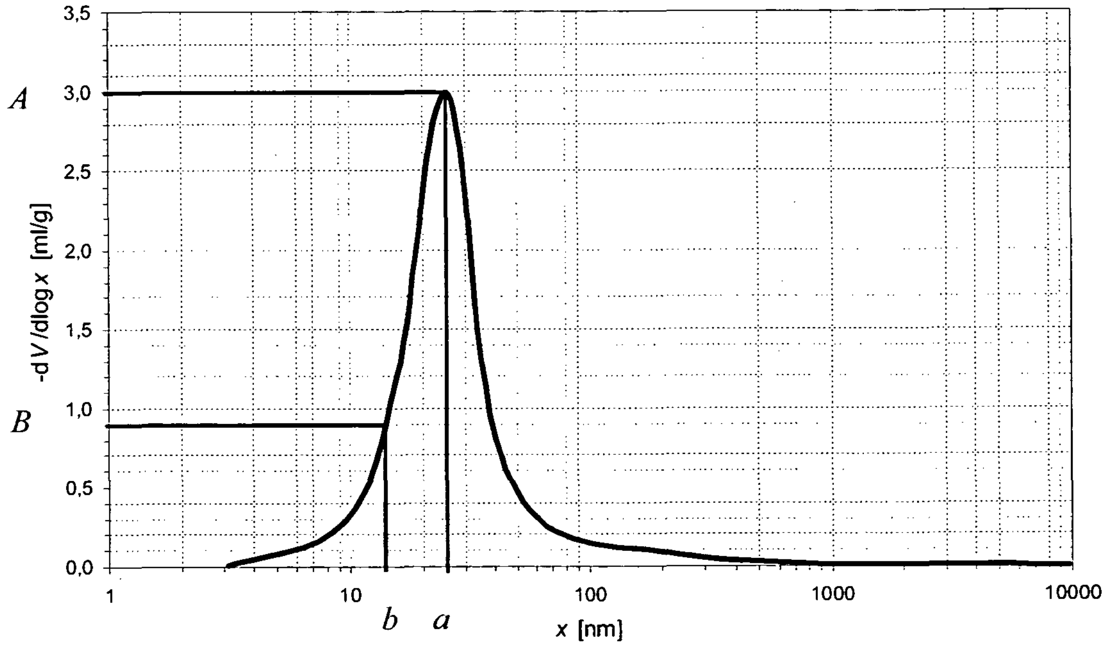


**Figur 1:**

Typischer Kurvenverlauf der negativen logarithmischen Ableitung des kumulierten Porenvolumens *V* hinsichtlich des Porendurchmessers *x* mit den Merkmalen *a*, *b*, *A* und *B*.

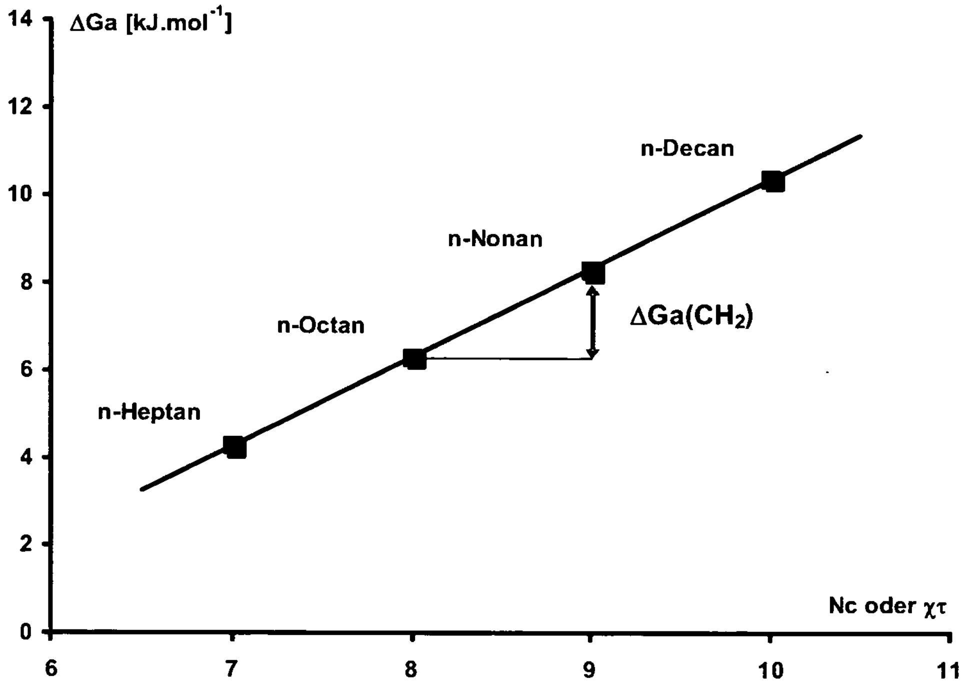


**Figur 2.:**

Beispiel für die Gerade der n-Alkane zur Bestimmung des Morphologieindex.

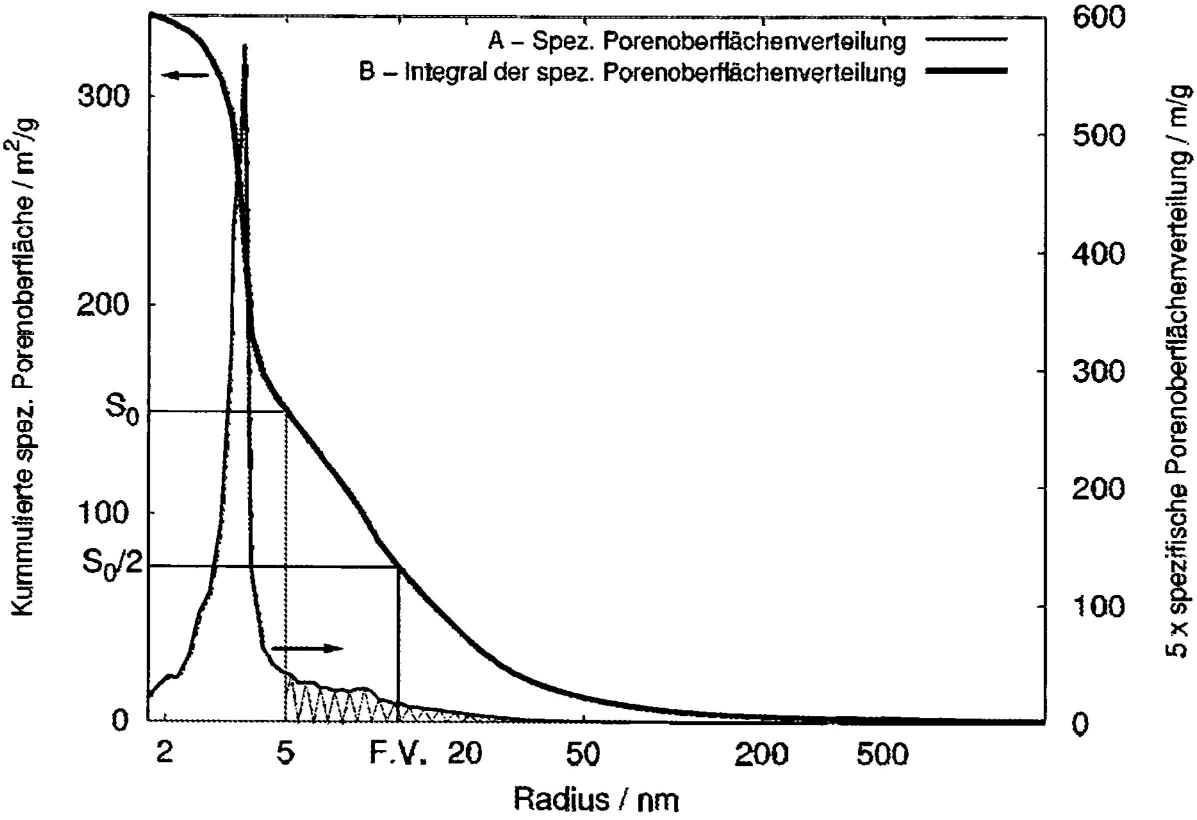


Figur 3:

Dargestellt sind die spezifische Porenoberflächenverteilung **A**(r) und deren Integral, **B**(r).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0520862 B1
- EP 0670813 B1
- EP 917519 B1
- EP 0937755 A
- DE 2447613
- US 4094771 A
- DE 3437473
- DE 19609619
- DE PS4004781 C
- WO 9909036 A
- EP 1108231 A
- DE 10137809
- DE 10163945
- DE 10223658


### In der Beschreibung aufgeführte Nicht-Patentliteratur


- **S. WOLFF.** Chemical Aspects of Rubber Reinforcement by Fillers. *Rubber Chem. Technol.,* 1996, vol. 69, 325
- **U. GÖRL ; R. PANENKA.** Silanisierte Kieselsäuren - Eine neue Produktklasse für zeitgemäße Mischungsentwicklung. *Kautsch. Gummi Kunstst.,* 1993, vol. 46, 538
- **H.-D. LUGINSLAND.** Processing of Silica/Silane-Filled Tread Compounds. *ACS Meeting,* 04. April 2000
- **U. GÖRL ; A. HUNSCHE ; A. MÜLLER ; H. G. KOBAN.** Investigations into the Silica/Silane Reaction System. *Rubber Chem. Technol.,* 1997, vol. 70, 608
- **S. BRUNAUER ; P. H. EMMETT ; E. TELLER.** Adsorption of Gases in Multimolecular Layers. *J. Am. Chem. Soc.,* 1938, vol. 60, 309
- **J. R. CONDER ; C. L. YOUNG.** Physico-Chemical Measurement by Gas Chromatography. Wiley, 1979, 26-32
- **E. BRENDLE ; E. PAPIRER.** A new topological index for molecular probes used in inverse gas chromatography for the surface nanorugosity evaluation. *J. Colloid Interface Sci.,* 1997, vol. 194, 207-216
- **W. HOFMANN.** Kautschuktechnologie. Genter Verlag, 1980